# EUROPEAN PATENT APPLICATION

(11) **EP 4 579 505 A1**
(43) Date of publication of application: **02.07.2025**
(21) Application number: 24213220.7
(22) Date of filing: 15.11.2024
(51) Int. Cl.: G06F 21/57

(54) **DEVICES AND METHODS FOR COMPLIANCE OF CYBERSECURITY REQUIREMENTS OF HARDWARE AND SOFTWARE COMPONENTS**

(30) Priority: 27.12.2023 US 202318396811
(71) Applicant: INTEL Corporation, Santa Clara, CA 95054 (US)
(72) Inventor: MUECK, Markus Dominik, 82008 Unterhaching (DE); PILLOUD, Valerie, Santa Clara, CA, 95054 (US)
(74) Representative: Viering, Jentschura & Partner mbB Patent- und Rechtsanwälte

(57) **Abstract**

An apparatus may include a processor, the processor configured to: access a container cryptographically bound to a component of a digital entity, wherein the container comprises information representative of a compliance of the digital entity to cybersecurity requirements, wherein the component of the digital entity comprises a hardware component or a software component; determine, based on the information, a result representing whether the digital entity is compliant with the cybersecurity requirements; determine, based on the result, a verification state of the digital entity.

## Description

### TECHNICAL FIELD

The present disclosure is generally related to an apparatus and methods for products including hardware and/or software components and compliance of the hardware and/or software components or the products, in particular the compliance with cybersecurity requirements.

### BACKGROUND

Cybersecurity may be considered as a crucial practice for protecting systems, networks, products, data from malicious cyberattacks to ensure the information security. Lack of security within products handling data may put digital data that may private and personal data of users, in a jeopardy, which may be exploited by an attack to access data in an unauthorized manner. To address this issue, it is imperative for products to provide various aspects of security and operate in an invulnerable manner in order to preserve confidentiality of data and form a robust structure against potential attacks.

The European Commission has published a first draft of the "Cyber Resilience Act (CRA)" governing market access for any type of software or hardware product including hardware or software components which are in scope of the regulation. European Commission (EC), as the executive branch of the European Union (EU) recently proposed the CRA in an effort to ensure more secure products involving hardware and/or software elements in the market. The CRA intends to ensure a measure of cybersecurity is maintained for any digital entities that are described as products incorporating hardware and/or software components. The CRA fundamentally aims to let those products exist in the market with fewer vulnerabilities while enforcing manufacturers to produce and maintain the products in accordance with the CRA. Consequently, the standardization is expected to result in an security increase for the digital entities. There is however no consensus on how those products would be ensured to be compliant with certain aspects provided in the CRA.

### BRIEF DESCRIPTION OF DRAWINGS

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
Figure 1 shows an example including a processor.
Figure 2 shows an example of an apparatus in accordance with various aspects of the disclosure.
Figure 3 shows an example of an apparatus in accordance with various aspects of the disclosure.
Figure 4 shows an example of an apparatus in a hierarchical structure in accordance with various aspects of the disclosure.
Figure 5 shows an illustrative example of a flow diagram in accordance with various aspects of the disclosure.
Figure 6 shows an illustrative example of a flow of data in accordance with various aspects of the disclosure.
Figure 7 shows an illustrative example associated with a data flow in accordance with various aspects of the disclosure.
Figure 8 shows an example including logical blocks for data.
Figure 9 shows an example of a flow diagram associated with AI requirements.
Figure 10 shows an example of a device in accordance with various aspects of the disclosure.
Figure 11 shows a flow diagram including a process of an update request.
Figure 12 shows a block diagram of components in accordance with various aspects of the disclosure.
Figure13 shows an illustrative example of a method.
Figure 14 shows an illustrative example of a method.
Figure 15 shows an illustrative example of a method.
Figure 16 shows schematically an association including a processor and data in accordance with the various aspects of the disclosure.

### DETAILED DESCRIPTION

The following detailed description refers to the accompanying drawings that show, by way of illustration, exemplary details and aspects in which aspects of the present disclosure may be practiced.

Cyberattack is a critical issue for products including at least a hardware and/or software component, as the attacks may cause the products or other products interacting with the products to malfunction, expose important data for attackers to use for their advantage, and the like. Thus, products containing hardware/software are expected to be reliable, secure and as less vulnerable as possible. To ensure this, products may be expected to satisfy certain standards of security that may describe certain aspects for the purpose of providing minimum and/or acceptable security against known vulnerabilities and exploitation attempts. Presently, manufacturers may take several measures to provide a level of security against malicious attacks, yet these measures were, in general, limited with running an in-house risk analysis and taking necessary precautions to mitigate the identified risks.

As indicated, the European Commission has published a first draft of the CRA: In parallel, the European Commission is working on a Standardisation Request in support of Union policy on horizontal cybersecurity requirements for products with digital elements of which a first draft version was made available to European Standards Organisations (ESO) including ETSI (European Telecommunications Standards Institute) (made available to ETSI on July 20th, 2023). The Standardisation Request indicates development of 44 standards on the following 3 areas: i) Product-agnostic cybersecurity requirements relating to the properties of products with digital elements; ii) Vulnerability handling requirements for products with digital elements; iii) Product-specific cybersecurity requirements relating to the properties of products with digital elements. Various aspects described herein includes various operations related to such requirements, which may sometimes be, or included by the term "cybersecurity requirements" described herein.

Cybersecurity requirements, such as requirements within the CRA regulation may require approaches for assessing and validating the correct implementation of designated features associated with the products, which may lead to a legal certainty at an extent, for the purpose of ensuring implementation of various security mechanisms against known vulnerabilities and/or security attacks. The CRA describes certain requirements to be implemented by various products. In particular, certain requirements described by the CRA are product-agnostic, therefore any product containing hardware and/or software components, regardless of the respective manufacturer or type or category or features of the product is expected to comply with such "product-agnostic" requirements.

Accordingly, various aspects have been described in this disclosure that may address how products may be configured to ensure compliance to certain cybersecurity requirements, in some aspects for the compliance of the product, and in some aspects for the compliance of other products including or interacting with the products including hardware and/or software components. In some examples, aspects with respect to the cybersecurity requirements may also correspond to a cybersecurity regulation itself, such as the CRA. In other words, the term "cybersecurity requirements" used in this disclosure may include the requirements described in the CRA. Aspects described herein for the cybersecurity requirements may increase overall data access security and/or reduce invulnerabilities of data stored and/or processed and/or communicated by a product. In particular, various aspects may include an interoperation of digital entities in a product through which compliance to cybersecurity requirements (e.g. to the CRA) of all digital elements in the product may be required and verified. Illustratively, a compliance of a product including a hardware and/or software component may be required for any information system (including General Purpose Microprocessors, Microcontrollers, Secure Elements, computer networks, cellular networks, radio local area network (RLAN) networks, etc.) to be operated.

Illustratively, Table 1 shows exemplary cybersecurity requirements, described also as "essential cybersecurity requirements" within the CRA, in accordance with various aspects of this disclosure:

| Table1: Essential Requirements of the Cyber Resilience Act (required to be met in order to access the Single European Market) |
|---|
| ANNEX I - ESSENTIAL CYBERSECURITY REQUIREMENTS |
| 1. SECURITY REQUIREMENTS RELATING TO THE PROPERTIES OF PRODUCTS WITH DIGITAL ELEMENTS |
| (1) Products with digital elements shall be designed, developed and produced in such a way that they ensure an appropriate level of cybersecurity based on the risks; |
| (2) Products with digital elements shall be delivered without any known exploitable vulnerabilities; |
| (3) On the basis of the risk assessment referred to in Article 10(2) and where applicable, products with digital elements shall: |
| (a) be delivered with a secure by default configuration, including the possibility to reset the product to its original state; |
| (b) ensure protection from unauthorised access by appropriate control mechanisms, including but not limited to authentication, identity or access management systems; |
| (c) protect the confidentiality of stored, transmitted or otherwise processed data, personal or other, such as by encrypting relevant data at rest or in transit by state of the art mechanisms; |
| (d) protect the integrity of stored, transmitted or otherwise processed data, personal or other, commands, programs and configuration against any manipulation or modification not authorised by the user, as well as report on corruptions; |
| (e) process only data, personal or other, that are adequate, relevant and limited to what is necessary in relation to the intended use of the product (`minimisation of data'); |
| (f) protect the availability of essential functions, including the resilience against and mitigation of denial of service attacks; |
| (g) minimise their own negative impact on the availability of services provided by other devices or networks; |
| (h) be designed, developed and produced to limit attack surfaces, including external interfaces; |
| (i) be designed, developed and produced to reduce the impact of an incident using appropriate exploitation mitigation mechanisms and techniques; |
| (j) provide security related information by recording and/or monitoring relevant internal activity, including the access to or modification of data, services or functions; |
| (k) ensure that vulnerabilities can be addressed through security updates, including, where applicable, through automatic updates and the notification of available updates to users |
| 2. VULNERABILITY HANDLING REQUIREMENTS |
| Manufacturers of the products with digital elements shall: |
| (1) identify and document vulnerabilities and components contained in the product, including by drawing up a software bill of materials in a commonly used and machine-readable format covering at the very least the top-level dependencies of the product; |
| (2) in relation to the risks posed to the products with digital elements, address and remediate vulnerabilities without delay, including by providing security updates; |
| (3) apply effective and regular tests and reviews of the security of the product with digital elements; |
| (4) once a security update has been made available, publically disclose information about fixed vulnerabilities, including a description of the vulnerabilities, information allowing users to identify the product with digital elements affected, the impacts of the vulnerabilities, their severity and information helping users to remediate the vulnerabilities; |
| (5) put in place and enforce a policy on coordinated vulnerability disclosure; |
| (6) take measures to facilitate the sharing of information about potential vulnerabilities in their product with digital elements as well as in third party components contained in that product, including by providing a contact address for the reporting of the vulnerabilities discovered in the product with digital elements; |
| (7) provide for mechanisms to securely distribute updates for products with digital elements to ensure that exploitable vulnerabilities are fixed or mitigated in a timely manner; |
| (8) ensure that, where security patches or updates are available to address identified security issues, they are disseminated without delay and free of charge, accompanied by advisory messages providing users with the relevant. |

Furthermore, Table 2 describes a set of requirements that may be used for all digital entities, described as "product-agnostic cybersecurity requirements" associated with the CRA, in accordance with various aspects of this disclosure:

| Table 2: Cyber Resilience Act SR [2], Annex II, Section 2.1 |
|---|
| 2.1 Product-agnostic cybersecurity requirements relating to the properties of products with digital elements |
| This (these) European standard(s) or European standardisation deliverable(s) shall set out specifications for the design, development and production of products with digital elements in such a way that they ensure an appropriate level of cybersecurity based on the risks. The development of one or more horizontal or product-agnostic standards addressing different aspects and mechanisms of product cybersecurity can support the coherent development of subsequent standards for categories of products or product-specific standards. Thus, this request emphasises the importance of product-agnostic standards considering the broad scope of products covered by the proposed Regulation. As such, the product-agnostic European standards or European standardisation deliverables to be developed should provide not only elements which are common to all products under the scope of the request, but also consider vertical specifications for relevant product categories, when deemed necessary in light of the specific cybersecurity risks posed by different products or product categories. In particular, wherever relevant, the standards developed under this section should include specifications on secure software development. |
| The European standards and European standardisation deliverables produced should take into account the interdependencies between the different requirements reflected in the standards listed in Annex I of this request, in particular standards 1 to 12, and to the extent possible reflect them explicitly in the corresponding specifications. |

Furthermore, Table 3 describes a set of requirements that may be used as vulnerability handling requirements, described as "vulnerability handling requirements for products with digital elements" associated with the CRA, in accordance with various aspects of this disclosure:

| Table 3: Cyber Resilience Act SR [2], Annex II, Section 2.2 |
|---|
| 2.2 Vulnerability handling requirements for products with digital elements |
| This (these) European standard(s) or European standardisation deliverable(s) shall provide specifications for vulnerability handling processes, covering all relevant product categories, to be put in place by manufacturers of the products with digital elements. Those processes shall at least allow the manufacturer to: |
| (a) identify and document vulnerabilities and components contained in the product, including by drawing up a software bill of materials in a commonly used and machine readable format covering at the very least the top-level dependencies of the product; |
| (b) in relation to the risks posed to the products with digital elements, address and remediate vulnerabilities without delay, including by providing security updates. |
| (c) apply effective and regular tests and reviews of the security of the product with digital elements; |
| (d) once a security update has been made available, publically disclose information about fixed vulnerabilities, including a description of the vulnerabilities, information allowing users to identify the product with digital elements affected, the impacts of the vulnerabilities, their severity and information helping users to remediate the vulnerabilities; |
| (e) put in place and enforce a policy on coordinated vulnerability disclosure; |
| (f) take measures to facilitate the sharing of information about potential vulnerabilities in their product with digital elements as well as in third party components contained in that product, including by providing a contact address for the reporting of the vulnerabilities discovered in the product with digital elements; |
| (g) provide for mechanisms to securely distribute updates for products with digital elements to ensure that exploitable vulnerabilities are fixed or mitigated in a timely manner; |
| (h) ensure that, where security patches or updates are available to address identified security issues, they are disseminated without delay and free of charge, accompanied by advisory messages providing users with the relevant information, including on potential action to be taken. |
| This (these) European standard(s) or European standardisation deliverable(s) shall be drafted in such as way that would ensure that the harmonised standards to follow after the entry into force of the Cyber Resilience Act may provide presumption of conformity regarding the implementation of appropriate procedures that can support an adequate vulnerability handling, containing at least the elements described above |

Furthermore, Table 4 describes a set of requirements that may be used as vulnerability handling requirements, described as "product-specific cybersecurity requirements relating to the properties of products with digital elements" associated with the CRA, in accordance with various aspects of this disclosure:

| Table 4: Cyber Resilience Act SR [2], Annex II, Section 2.3 |
|---|
| 2.3 Product-specific cybersecurity requirements relating to the properties of products with digital elements |
| This (these) European standard(s) or European standardisation deliverable(s) shall provide specifications for the cybersecurity requirements of specific products or, when appropriate, product categories. In particular, the addressees should consider the products or product categories mentioned in Annex I, standards 14 to 44, of this request. |
| When developing these standards, due account shall be given to the product-agnostic specifications set out in Annex I, standards 1 to 12, while taking also into consideration relevant differences arising from intended use and operational environments, as well as reasonably foreseeable uses and misuses. |
| Where standards target only specific risk scenarios such as linked to areas listed in Annex I to Directive (EU) 2022/2555 (NIS2) or industrial contexts, addressees should consider whether it is appropriate to develop a standard for an entire product type rather than solely for the specific risk or use mentioned in order to ensure coherence with future standardisation work focusing on the same technology but broader uses. |
| This (these) European standard(s) or European standardisation deliverable(s) shall be drafted in such as way that would ensure that the harmonised standards to follow after the entry into□force of the Cyber Resilience Act may provide presumption of conformity regarding the sets of risks they identify, and should strive to adequately cover all major risks identified after an exhaustive analysis |

A product including one or more digital entities may implement various aspects described herein for the purpose of a compliance to certain cybersecurity requirements with a processor. In some aspects, the cybersecurity requirements herein may be a proposed or an approved regulation as exemplified above. In an example, the cybersecurity requirements may include the requirements of the CRA. Thus, the terms regulation and cybersecurity requirements may be used interchangeably throughout the disclosure. The regulation may be any cybersecurity related draft presenting the cybersecurity requirements.

In some aspects, the processor may perform various operations that may include operations for determining whether a hardware and/or a software component of a digital entity is compliant with the cybersecurity requirements. As an output of the determination, the processor may determine a verification state for the corresponding digital entity regarding the compliance with the cybersecurity requirements, which the verification state may indicate that the processor has verified the compliance of the cybersecurity requirements or that the digital entity is in compliance with the cybersecurity requirements.

A digital entity, as used in this disclosure, may include an entity (e.g. a product) with digital elements, which may include any software or hardware product and its remote data processing solutions, including software or hardware components to be placed on the market separately. In particular the term "digital entity" includes a product with a hardware and/or software component as described in the CRA. The term 'software' may refer to the part of an electronic information system which includes computer code. The term `hardware' may refer to a physical electronic information system, or parts thereof capable of processing, storing or transmitting of digital data. The term 'component' may refer to software or hardware intended for integration into an electronic information system.

Such a digital entity, of which a processor determines that the digital entity is in compliance with the cybersecurity requirements, may be referred to as a verified digital entity in this disclosure. Further components of the product, such as a further digital entity or the processor, may identify that a verified digital entity is in compliance with the cybersecurity requirements and interact with the verified digital entity accordingly. In some aspects, the further digital entity or the processor may determine to interoperate and/or function with the verified digital entity for their compliance with the cybersecurity requirements or cause the workload input, processed, and/or output by the verified digital entity to be in compliance with the cybersecurity requirements.

Additionally, the verification state may indicate that the processor has not verified or is unable to verify the compliance of the digital entity with the cybersecurity requirements or that the digital entity is not in compliance with the cybersecurity requirements. Such a digital entity, of which a processor determines that the digital entity is not in compliance with the cybersecurity requirements., may be referred to as an unverified digital entity in this disclosure. Further components of the product, such as a further digital entity or the processor, may identify that an unverified digital entity is not in compliance with the cybersecurity requirements and interact with the unverified digital entity accordingly. In some aspects, the further digital entity or the processor may determine not to interoperate and/or function with the unverified digital entity for their compliance with the cybersecurity requirements or cause the workload input, processed, and/or output by the unverified digital entity to be not in compliance with the cybersecurity requirements..

There may be various interaction types associated with a verified or an unverified digital entity. In some examples, a further digital entity and/or the processor may determine an interaction type to interact with the verified or unverified digital entity based on certain requirements, some of which may also be defined as a requirement of the cybersecurity requirements. Maintaining a verification state of a digital entity throughout the product may allow the processor or further digital entities of the product to determine their interactions with the digital entity. In some aspects, the determination of a verification state of the digital entity is independent (i.e. not interrelated or separate) from the operation of the software and/or hardware component of the digital entity, so that the processor or further digital entities may not harm their own compliance to the cybersecurity requirements. solely by performing a determination of a verification state of the digital entity.

It is to be noted that a cybersecurity regulation may impose different requirements in accordance with various conditions. Illustratively, the CRA differentiates a first type of products as critical products class I, a second type of products as critical products class II, a third type of products as other "Products with digital elements" not falling in these two classes, which sometimes may be referred to as "non-critical products", and potentially a fourth type of products as "Highly critical products"; as indicated in Table 5. For each type described here, a processor described in this disclosure may take an action for a different set of requirements designated for the corresponding type. In some examples, a set of requirements designated for a type of products may partially or wholly include a set of requirements designated for another type of products.

Table 1 of this disclosure includes the first type of products and the second type of products as following:

| Table 5: Critical Products with Digital Elements |
|---|
| Class I |
| 1. Identity management systems software and privileged access management software; |
| 2. Standalone and embedded browsers; |
| 3. Password managers; |
| 4. Software that searches for, removes, or quarantines malicious software; |
| 5. Products with digital elements with the function of virtual private network (VPN); |
| 6. Network management systems; |
| 7. Network configuration management tools; |
| 8. Network traffic monitoring systems; |
| 9. Management of network resources; |
| 10. Security information and event management (SIEM) systems; |
| 11. Update/patch management, including boot managers; |
| 12. Application configuration management systems; |
| 13. Remote access/sharing software; |
| 14. Mobile device management software; |
| 15. Physical network interfaces; |
| 16. Operating systems not covered by class II; |
| 17. Firewalls, intrusion detection and/or prevention systems not covered by class II; |
| 18. Routers, modems intended for the connection to the internet, and switches, not covered by class II; |
| 19. Microprocessors not covered by class II; |
| 20. Microcontrollers; |
| 21. Application specific integrated circuits (ASIC) and field-programmable gate arrays (FPGA) intended for the use by essential entities of the type referred to in [Annex I to the Directive XXX/XXXX (NIS2)]; |
| 22. Industrial Automation & Control Systems (IACS) not covered by class II, such as programmable logic controllers (PLC), distributed control systems (DCS), computerised numeric controllers for machine tools (CNC) and supervisory control and data acquisition systems (SCADA); |
| 23. Industrial Internet of Things not covered by class II. |
| Class II |
| 1. Operating systems for servers, desktops, and mobile devices; |
| 2. Hypervisors and container runtime systems that support virtualised execution of operating systems and similar environments; |
| 3. Public key infrastructure and digital certificate issuers; |
| 4. Firewalls, intrusion detection and/or prevention systems intended for industrial use; |
| 5. General purpose microprocessors; |
| 6. Microprocessors intended for integration in programmable logic controllers and secure elements; |
| 7. Routers, modems intended for the connection to the internet, and switches, intended for industrial use; |
| 8. Secure elements; |
| 9. Hardware Security Modules (HSMs); |
| 10. Secure cryptoprocessors; |
| 11. Smartcards, smartcard readers and tokens; |
| 12. Industrial Automation & Control Systems (IACS) intended for the use by essential entities of the type referred to in [Annex I to the Directive XXX/XXXX (NIS2)], such as programmable logic controllers (PLC), distributed control systems (DCS), computerised numeric controllers for machine tools (CNC) and supervisory control and data acquisition systems (SCADA); |
| 13. Industrial Internet of Things devices intended for the use by essential entities of the type referred to in [Annex I to the Directive XXX/XXXX (NIS2)]; |
| 14. Robot sensing and actuator components and robot controllers; |
| 15. Smart Meters |

In some aspects, the digital entity may include a container and a hardware/software component to which the container may be cryptographically bound to. A cryptographic binding (i.e. being cryptographically bound) herein may refer to an association of the container (e.g. information within the container) and the software and/or hardware component using cryptographic techniques. In some cases, the cryptographic binding may refer to using a digital signature which uses cryptographic keys. In an example, information held by the container and associated with a corresponding hardware and/or software component may be encrypted using a key to prevent unauthorized access and protect data integrity and authenticity.

In accordance with the various aspects described herein, the container may be a data container encapsulating objects representative of information pertinent to the digital entity, so that the information regarding the digital entity may be stored and managed. The management operations may include inserting the objects, deleting the objects, accessing the objects in the container, etc. The size of the container may be adjusted based on the size of the information held by the container. The container may include information about the identification of the hardware component and/or the software component that it is cryptographically bound to. The container may include a compliance statement in line with a first set of requirements of the cybersecurity requirements. In some aspects, the container may further include a type information or specifications of a product in accordance with a second set of requirements of the cybersecurity requirements.

In some aspects, the first set of requirements may be related to requirements put forward by the regulation that any product containing digital elements should comply with in order to enhance security and be resilient against cyberattacks. The first set of requirements, accordingly may apply to each digital entity of a digital entity that intends to comply with the cybersecurity requirements. Therefore, the first set of requirements may be product agnostic requirements and accordingly does not depend on a specific aspect of the digital entity. Illustratively, the first set of requirements may include a first group of requirements described in the CRA and the second set of requirements may include a second group of requirements described in the CRA. In some examples, the second group of requirements may include a group of requirements of another cybersecurity-related regulation, such as artificial intelligence (AI) requirements. AI requirements may include an AI Regulation, such as the AI Act drafted by the European Parliament.

In some examples, any specific types (e.g. categories) of products may comply with the second group of requirements. Accordingly, a processor may verify a digital entity of such specific types only if the digital entity is in complaint with both the first set of requirements and the second set of requirements. The second set of requirements may include vertical specifications for relevant product categories. The term "verticals" herein may refer to a product, equipment, entity, and/or application type/category determined by the cybersecurity requirements. Accordingly, those verticals may need to comply with a set of specific essential requirements, additional to the requirements that each digital entity regardless of its type/category may need to comply (i.e. product-agnostic requirements). The specific essential requirements may be the second set of requirements described in this disclosure (i.e. product-specific requirements).

In some aspects, a verification state of a digital entity may indicate cybersecurity requirements for which the digital entity is verified. For example, a verification state of a digital entity may indicate for which set of requirements a digital entity has been verified. Illustratively, a first verification state of a digital entity may indicate that the digital entity is a verified digital entity (or an unverified digital entity) for the first set of requirements. Further, a second digital entity may indicate that the digital entity is a verified digital entity (or an unverified digital entity) for the second set of requirements. Illustratively, a first verification state of a digital entity may include information representing compliance to product-agnostic cybersecurity requirements, while a second verification state of the digital entity may include information representing compliance to product-specific cybersecurity requirements. Illustratively, a third verification state of the digital entity may include information representing compliance to another cybersecurity requirements, such as compliance to the AI requirements.

In accordance with the various aspects provided herein, the second set of requirements may be necessary for compliance of designated digital entities to function in a secure, reliable manner with mitigated risks against potential cyberattacks and to protect data integrity and confidentiality. In some aspects, the compliance of a digital entity to a regulation may be satisfied by meeting both the first and the second set of requirements. As a result, while the first set of requirements may be product-agnostic (i.e. applicable to all products), the second set of requirements may be applicable to only certain products among all products, and in some aspects in addition to the first set of requirements applicable to all products. Such requirements may be referred to as product-specific requirements.

Digital entities may be able to comply with the cybersecurity requirements by satisfying the first set of requirements and, if required, the second set of requirements. A product may refer to a product including one or more digital entities. To achieve this, a verification process, via a processor, may determine whether a corresponding digital entity is compliant with the regulation. In the case that the product includes a plurality of digital entities and the processor determines that each digital entity is compliant with the cybersecurity requirements, then the product may also be compliant with the regulation.

In some aspects, the processor may perform a verification process in a dynamic manner to determine a verification state (i.e. verification state) for a corresponding digital element. A dynamic verification process may include the processor determining the verification state of a digital entity based on a predetermined time interval, i.e. at each configured interval. In some aspects, the dynamic verification check may include a determination of a verification state of the digital entity in response to a received interaction or interaction request, exemplarily at any time point that an interacting element intends to use or operate the digital entity.

In accordance with the various aspects provided herein, the processor may further determine a verification state of a product including a plurality of digital entities including the processor when the processor determines respective verification state of all digital entities included by the product, such that each verification state of each digital entity indicates that the respective digital entity is in compliance with the cybersecurity requirements.

In some examples, multiple digital entities may form an assembly and the processor may determine a verification state of the assembly. An assembly may include any interaction of at least two digital entities. In some examples, when multiple digital entities are involved in an aggregated entity, such as an assembly or the product itself, when the processor determines a verification state for the aggregated entity, the processor may further perform an analysis of an interaction, between multiple digital entities. The interaction may refer to functional association among the hardware and/or software components of the digital entities. In some examples, an interaction may include a connection, a coupling, an interoperation, an association to generate an assembly or a product that uses the association, a collaboration, and/or an exchange of signal or information

In some aspects, the described process of determining the verification may be impractical to use for a complex product. The term complex product may refer to a product involving a plurality of software and/or hardware components. In a non-limiting example, a complex product may involve multiple further hardware and/or software components in addition to the main hardware/software components. In another non-limiting example, a complex product may involve a plurality of interactions among its hardware/software components. An arrangement may be provided for performing an identical verification process for each predefined subset of digital entities. In this arrangement, the processor may determine a verification state of the corresponding subset of the digital entities. Verification for the combination of the subsets may follow the successful verification of each subset, (i.e. a subset composed of verified digital entities) completing the hierarchical verification process.

In accordance with the various aspects provided herein, an apparatus may be provided to carry out one or more functions relating to the determination of the verification state of a digital entity described. In some aspects, the apparatus may include a processor with similar or identical capabilities to the processor described.

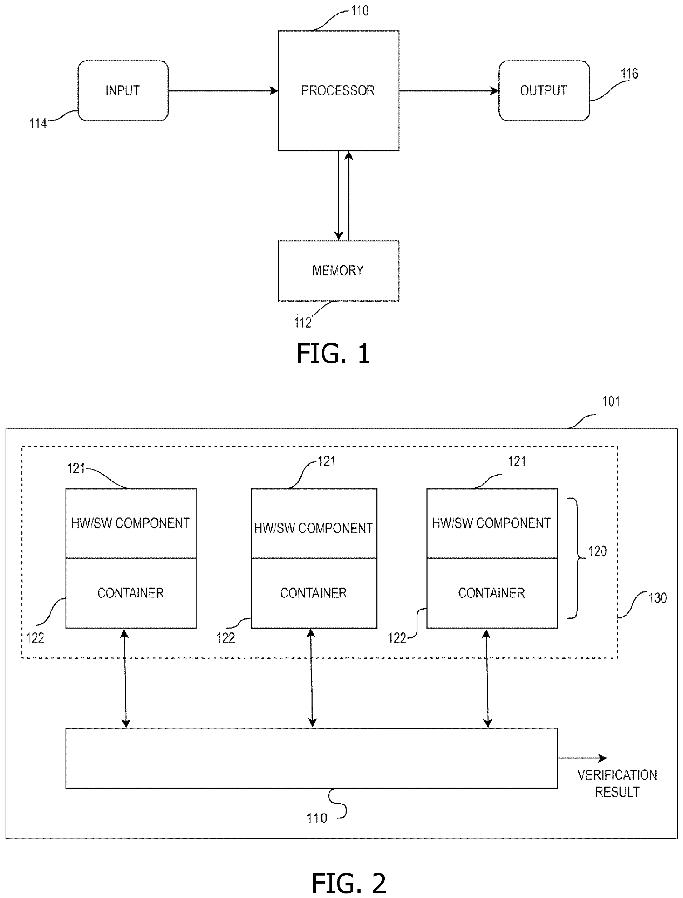

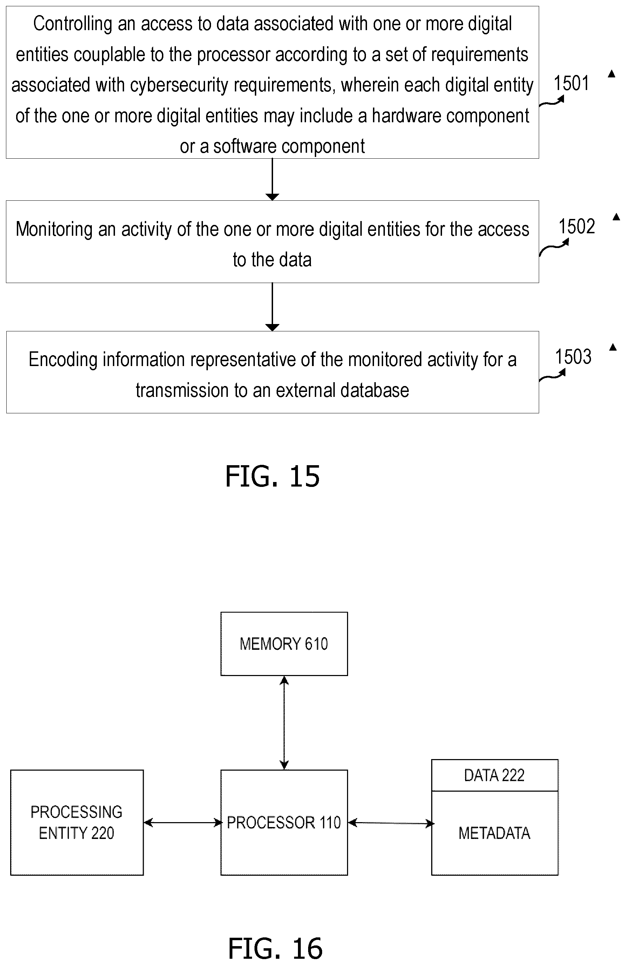

Figure 1 illustrates an example including a processor in accordance with the various aspects of the disclosure. The processor 110 may include an arithmetic logic unit (ALU), a control unit, registers. The processor 110 may interact with a memory 112 unit via a communication interface. The memory 112 may store data and/or instructions for the processor 110 to use and/or execute. The processor 110 may decode the instructions and execute them accordingly. The processor 110 may also accept an input 114 via a bus. Accordingly, the processor 110 may provide an output 116 via a bus. The control unit (not shown) may orchestrate the data-flow and the ALU (not shown) may perform arithmetic or logical operations. In accordance with various aspects provided herein, the processor 101 may perform operations to obtain and/or access a cryptographically bound data or metadata as described in accordance with Figure 16.

Figure 2 shows an example of an apparatus 101. The apparatus 101 has been illustrated to include a plurality of digital entities, but this should not be taken as limiting, and various aspects described herein for the apparatus 101 may include that the apparatus 101 is communicatively couplable to one or more digital entities, which may be internal to the apparatus 101 as depicted here or external to the apparatus 101. In some examples, the apparatus 101 may include one or more digital entities, and may also communicate (via a processor and/or a communication interface) with one or more external digital entities.

Each digital entity 120 may include a hardware and/or a software component 121. As an example, a digital entity 120 may be any one of the entities described in Table 5 in this disclosure, or illustratively a sensor, such as a robotic sensor, including an audio retrieval unit as a hardware component, and/or an audio coding unit as a software component. In some examples, a digital entity 120 may include a processing entity such as a processing unit, a processor, an accelerator, etc. as a hardware component, which may execute instructions stored as a software component.

Further, each digital entity 120 may include a corresponding container 122. The container 122 may be cryptographically bound to the hardware and/or software component 121 of the respective digital entity 120. The container 122 may be configured to store information related and/or representative of a compliance of the digital entity 120 to one or more cybersecurity requirements. It is to be noted herein that various aspects have been described for one digital entity, which the aspects inherently may apply to each digital entity of the plurality of digital entities 120 described herein respectively, unless indicated otherwise. In such cases, some aspects described herein may apply first digital entities of the plurality of digital entities 120 and some further aspects alternative to the some aspects may apply to second digital entities of the plurality of digital entities 120.

The apparatus 101 may include a processor 110 coupled to the digital entity 120. The processor may be such a processor 110 as depicted in Figure 1. The processor 110 may include one or more processing means. In various examples, the processor 110 may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 110 may be implemented in one processing unit, e.g. a system on chip (SOC), or a processor. In some examples the processor 110 may include one or more cores as computation units, an arithmetic logic unit, a control unit, a storage unit, a plurality of registers. The digital entity 120 may include an interface through which the processor 110 may read information stored in the container 122. In some examples, the digital entity 120 may provide information stored in the container 122 to a memory that is accessible by the processor 110.

The processor 110 may determine a verification state of the digital entity 120. The verification state may indicate that the digital entity 120 is a verified digital entity or an unverified digital entity. The processor 110 may access the container at which the information about the corresponding hardware and/or software 121 is stored. The information may include the hardware and/or software identifier and any other related information. The information may include a compliance statement in alignment with a set of requirements. In some examples, the information may include the first set of requirements designated as product-agnostic requirements. In some aspects, the information may further include a second compliance statement in alignment with the second set of requirements designated as product-specific requirements. A compliance statement may include illustratively, a self-declaration of conformity, or a conformity assessment by an entity. In an example, the processor may use the identification information in the container to determine whether the corresponding digital entity pairs with the identification information to ensure that the respective information in the container is not corrupted or altered. The information may further include a type or a category designated for the hardware and/or software component that the digital entity 120 may include.

In some aspects, the digital entity 120 may include more than a plurality of software components and/or a plurality of hardware components. In some further examples, the digital entity 120 may provide functions or operations that may cause the digital entity 120 to fall under multiple categories. Illustratively, the digital entity 120 may include a remote access/sharing software and a general purpose microprocessors, which, in accordance with Table 5 described herein, may result in that the digital entity 120 is a Class I and a Class II critical product, noting that the digital entity 120 may or may not provide both operations simultaneously for each interaction. In accordance with various aspects provided herein, the digital entity 120 may include the above-information for each hardware component and/or for each software component of the digital entity 120 or may include the above information for each function or state of the digital entity 120.

Illustratively, the information may include multiple compliance statements. For example, the information may include multiple first compliance statements associated with the first set of requirements. The information may further include multiple second compliance statements associated with the second set of requirements. In some aspects, the first compliance statements may be mandatory, and the second compliance statements may be optional depending on the category or type that the respective hardware or software component is associated with. In some examples, the container 122 may include the information described herein for each hardware component and/or for each software component that the digital entity 120 includes.

It is to be further noted that although the digital entity 120 may be a product having particular categories and/or types as exemplified above, the digital entity 120 may have designated services, functions, operations, and/or purposes directed to one or more product types or categories. Illustratively and complimenting to the example provided before, the digital entity 120 may not include the remote access/sharing software itself, but the digital entity 120 may include a software (e.g. a software library) which can be used by a remote access/sharing software. In accordance with the various aspects described herein, the information may include, a list of type/category information of the digital entity 120 in line with the second set of requirements, and in some examples, the list of type/category information may be designated for the digital entity 120 (or any one of its hardware and/or software component) with respect to the services, functions, operations, provided to or for other digital entities. In some examples, the information may further include a list of specific products and/or product categories for which compliance to the second set of requirements is given.

Based on the information stored in the container, the processor 110 may determine whether the corresponding hardware and/or software component 121 is compliant with the cybersecurity requirements. In an example, the processor 110 may compare the information stored in each container 122 to compliance-verifying information stored in a memory (not explicitly illustrated, e.g. a non-volatile memory) to determine the verification state of the digital entity 120. The processor 110 may evaluate the result and determine a verification state for the corresponding digital entity 120. The verification state may indicate the current status of compliance of the corresponding digital entity 120 with the cybersecurity requirements. Illustratively, the compliance-verifying information may change even during the operation of the apparatus 101, thereby making a digital entity 120 become unverified or require a further determination of the verification state in accordance with a different verification operation.

Illustratively, the compliance verifying information may include information representative of compliance statements to be verified and/or not verified. In some examples, the compliance verifying information may include a list of entities, such as entities described in Table 5 of this disclosure. The container 122 may include a type and/or category of the digital entity 120. For example, the processor 110 may determine whether to associate the second set of requirements with the digital entity 120 based on the type and/or category from the container 122.

To determine a verification state for the digital entity, the processor 110 may check a first compliance statement stored in the container 122, the first compliance statement being associated with the first set of requirements 122. Further, the processor 110 may determine whether type and/or category information stored in the container 122 includes one of the entities from the list of entities within the compliance verifying information (e.g. entities in Table 5). If the processor 110 determines that the type and/or category information stored in the container includes one of the entities from the list of entities, the processor 110 may further check a second compliance statement associated with the second set of requirements from the container 122. Based on the second compliance statement identified in the container 122, the processor 110 may determine a verified digital entity state as the verification state.

In examples, in which the digital entity 120 includes multiple hardware and/or software components, the processor 110 may determine whether each hardware component and software component of multiple hardware and/or software components is compliant with the cybersecurity requirements. In various aspects provided herein, the processor 1 10processor 110 may determine the verification state of the digital entity as a verified digital entity, only if the processor 1 10processor 110 determines that all hardware and/or software components of the digital entity 120 is compliant to the cybersecurity requirements.

The verification process may point to a-priori verification of the corresponding digital entity 120 and/or the product. A-priori verification may include that the processor may perform a verification process for the digital entity 120 before the intended use of the digital entity 120 and/or the product. The verification process may include any operation that the processor performs to determine a verification state of the digital entity, such as to access to the container of the digital entity, determination of the result or the verification status as described herein. The processor may perform a-posteriori verification which may include a monitoring of the container of the digital entity 120. In that case, the processor may monitor the digital entity 120 and perform the verification process continually or in predefined time intervals, which may include a periodic monitoring. The monitoring may be based on the intended use of the digital entity 120 and/or the product in the real-world applications.

Furthermore, the verification process may also be relevant to both a-priori and a-posteriori types of verification of the digital entity 120 and/or the product. In that case, a mixture of the both approaches may be used to ensure the compliance of the digital entity (120 and/or the product with the cybersecurity requirements.

In accordance with the various aspects provided herein, the processor may perform a dynamic verification process for individual digital entities 120 may be necessary to determine the compliance of the combination of the digital entities (e.g. a product). For example, a firmware update may cause a change in the first set and/or the second set of requirements that a corresponding digital entity 120 may need to comply with. In that scenario, when changes are applied, a periodic determination of the verification state of the corresponding digital entity 120 subjected to the corresponding change may be necessary.

In some aspects, the reasoning behind the described dynamic determination of a verification state of a digital entity 120 may be the fact that hardware and/or software components 121 are generic and may be used for any product, such as microprocessors, microcontrollers, etc. Therefore, for each digital entity 120, the processor may determine whether all hardware and/or software components 121 are verified for to use the combination of the hardware and/or software components (e.g. assembly) as a verified digital entity based on the first set of requirements and/or the second set of requirements. (i.e. use in a secure manner of a specific product category/type associated with the second set of requirements).

In further aspects of this disclosure, different contextual types may apply to relevant products. For example, a wireless communication product may be required to meet additional requirements in the specific domains of different industries such as health, aeronautics, etc. Therefore, a generally applicable wireless communication product such as a Wi-Fi access point may be required to be verified dynamically for usage in a specific target product category/type.

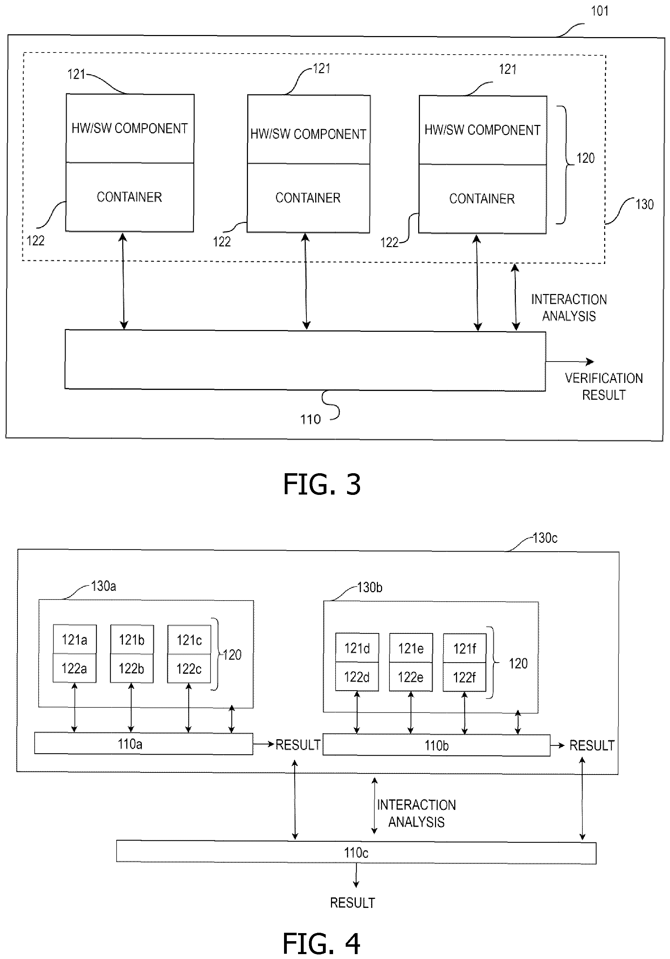

Figure 3 shows schematically an example of the apparatus 101. The processor 110 may monitor and analyze the interaction among the digital entities 120 of the assembly 130. In an example, the processor 110 may determine the verification state of the assembly 110 based on the verification state of both the individual digital entities 120 within a defined assembly 130 and the analyzed interaction. That is, the compliance of the assembly 130 may only be present when the processor checks and verifies the compliance of the individual digital entities 120 forming the assembly 130 as well as the faultless interaction in-between the digital entities 120. Any aspects described herein for the apparatus 101, the processor 110, the digital entity 120, described in this disclosure may apply to corresponding entities of the apparatus depicted in Figure 3.

In accordance with various aspects described herein, the processor 110 may determine the verification state of the digital entity 120 based on an interaction and/or a request of an interaction with the digital entity 120. Illustratively, a first digital entity of the plurality of digital entities may request to interact with a second digital entity of the plurality of digital entities. In this example, from the perspective of the second digital entity, the first digital entity may be referred to as an interacting entity. The second digital entity may be referred to as an interactee entity, as subject to the interaction or of the interaction request. An interaction may illustratively include an interoperation; an association to generate a product; and/or an exchange of signal or information.

Aspects for the interacting entity are described for the first digital entity, however, in some examples, the interacting entity may be another hardware and/or software component external to the second digital entity. In some examples, the processor 110 or other digital components of the apparatus may be the interacting entity. The interacting entity (e.g. the first digital entity, a digital entity 120) may send an interaction request to the processor 110. The processor 110 may receive the interaction request and may determine whether the interacting entity is a product compliant to any cybersecurity requirements. For this purpose, the processor 110 may determine a first verification state for the interacting entity. In some aspects, the processor 110 may determine whether the interacting entity is a product within the scope of the cybersecurity requirements associated with the verification state described herein.

For example, if the interacting entity is not determined as a product within the scope of the cybersecurity requirements, the processor may allow the interaction of the interacting entity with the interactee entity. In some examples, if the interacting entity is not determined as a product within the scope of the cybersecurity requirements, the processor may prevent the interaction of the interacting entity with the interactee entity.

Further, if the interactee entity is an unverified digital entity, the processor may prevent the interaction of the interacting entity. In some examples, the processor may, in response to a received interaction request, select an entity that is a verified digital entity from a plurality of digital entities. In order to maintain the compliance to the cybersecurity requirements, the processor may re-route an interaction request received from a verified digital entity, which the interaction request is made to an unverified digital entity, to another digital entity. The processor may perform the re-routing based on information about digital entities (e.g. functions, input and outputs, etc.) stored in a memory.

If the interactee entity is a verified digital entity at least for the first set of requirements, the processor may allow the interaction with the interactee entity in accordance with the first set of requirements. Further, the processor may determine whether the interactee entity is intended to be used for a product type or category associated with the second set of requirements. Illustratively, the processor may access the information within the container of the interactee entity to determine whether the interactee entity is intended to be used for a product type or category associated with the second set of requirements. In some examples, the interaction request may include information representing a type or category associated with the interacting entity, or a type or category designated for the interaction. In case the interactee entity is intended to be used for a product type or category associated with the set of requirements, the processor may allow the interaction with the interactee entity in accordance with the second set of requirements.

In examples, in which the digital entity 120 includes multiple hardware and/or software components, the processor 110 may determine whether each hardware component and software component of multiple hardware and/or software components is compliant with the cybersecurity requirements and only for a subset of multiple hardware and/or software components may be compliant to the cybersecurity requirements. In some examples, the processor may, for an interaction request indicating an interaction specifically for the subset, the processor may determine the verification state of the digital entity as a verified digital entity. However, if the verification request indicates an interaction including a hardware and/or software component which is not compliant with the cybersecurity requirements, the processor determines the verification state of the digital entity as an unverified digital entity.

In some aspects, at least two digital entities may form an assembly to interact with each other in any way. In other words, an assembly may include at least two interacting digital entities. The digital entities may interact with each other or with another digital entity internal or external to the assembly. Illustratively in a type of cooperation or collaboration, each digital entity within the assembly may operate for a respective designated task or workload under a common purpose.

There are various different architectures and relationships involving multiple digital entities to form an assembly. Illustratively, in an assembly, the digital entities may operate in a hierarchical relationship, in which one digital entity may control other digital entity. In an assembly, digital entities may operate in a consumer/provider relationship, in which a digital entity may provide a service and another digital entity may consume the service. Further in a coordinator/participant model, a digital entity may act as a coordinator or orchestrator, directing the actions of other components (participants) to achieve a specific goal. In a peer collaboration, digital entities may collaborate as equals, sharing tasks and/or workloads without a designated hierarchy. In a dependency-based interaction, digital entities may have dependencies on each other's functionalities or outputs. In a client/server model, similar to consumer/provider digital entities may act as clients requesting services or resources from server digital entities that provide these services. In collapsible hierarchies, digital entities can dynamically change their roles within a designated hierarchy. In adaptive interaction, digital entities may adjust their behaviors or interactions based on environmental changes, input variations, or feedback received from other digital entities.

In accordance with various aspects described herein, the processor may determine a verification status of an assembly including multiple digital entities. It is to be noted that an assembly including multiple digital entities may be, per definition, considered as a digital entity, as an assembly includes at least two hardware and/or software components of at least two digital entities.

In order to determine, by the processor, a verification state of an assembly as a verified digital entity, i.e. for the compliance of an assembly 130 to the cybersecurity requirements, verification states or compliances of individual digital entities 120 of the assembly 130 may be sufficient to determine the verification state of the assembly as a verified digital entity. However, in some cases, assembling compliant digital entities 120 together may not necessarily guarantee the assembly 130 is secure and compliant. The interaction between the hardware and/or software components 121 may be faulty and/or may reveal security risks. The term interaction may include a functional association in-between the digital entities 120. In such a case, the functionality of the apparatus 101 may be extended in a way that the processor 110 may monitor and analyze the interaction among the digital entities 120 to determine the verification state of the assembly 130.

Figure 4 shows an example of an apparatus in accordance with a hierarchical approach to determine the verification state of a product. The product described herein includes multiple assemblies including multiple digital entities. In some aspects, a single digital entity or a single assembly as a digital entity defining a product may be regarded as a simple product. However, in some cases, the product may be a complex product that may be defined by a plurality of assemblies. In such case, the architecture shown in Figure 2 and/or Figure 3 may be extended to illustrate a hierarchical structure including multiple assemblies and at least one processor (1 10a-c) associated with multiple digital entities 120.

In this illustration, the apparatus is depicted to include multiple processors (1 10a-c), each processor (110a-c) associated with a respective assembly (130a-c). Any aspects described herein for the apparatus 101, the processor 110, the digital entity 120, or the assembly 130 described in this disclosure may apply to corresponding entities of the apparatus depicted in Figure 4.

A first assembly (130a) may include a first digital entity including a first hardware and/or software component (121a) and a first container (122a), a second digital entity including a second hardware and/or software component (121b) and a second container (122b), and a third digital entity including a third hardware and/or software component (121c) and a third container (122c). A second assembly (130b) may include a fourth digital entity including a fourth hardware and/or software component (121d) and a fourth container (122d), a fifth digital entity including a fifth hardware and/or software component (121e) and a second container (122e), and a sixth digital entity including a sixth hardware and/or software component (121f) and a third container (122f). A third assembly (130c) may include the first assembly (130a) and the second assembly (130b).

A first processor (110a) may determine a verification state of each digital entity of the first assembly (130a). In some examples, the first processor (110a) may determine each verification state based on interactions within the first assembly (130a), i.e. the interactions of the first, second, and third digital entities with each other. Based on the verification state of each digital entity of the first assembly (130a), the first processor (110a) may determine a verification state of the first assembly (130a).

A second processor (1 10b) may determine a verification state of each digital entity of the second assembly (130b). In some examples, the second processor (110b) may determine each verification state based on interactions within the second assembly (130b), i.e. the interactions of the fourth, fifth, and sixth digital entities with each other. Based on the verification state of each digital entity of the second assembly (130b), the second processor (110a) may determine a verification state of the second assembly (130b).

A third processor (110c) may determine a verification state of the third assembly (130c). In some examples, the third processor (110c) may determine a corresponding verification state of each digital entity within the third assembly (130c), namely each of the first, second, third, fourth, fifth, and sixth digital entities. Based on the verification state of each digital entity within the third assembly (130c), the third processor (110c) may determine a verification state of the third assembly (130c). In some examples, the third processor (110c) may determine the verification state of the third assembly (130c) further based on interactions between the digital entities included by the third assembly (130c).

However, in some aspects, the third processor (1 10c) may rely on verification states determined by further processors. In this example, the third processor (110c) may receive information representing the verification state of the first assembly (130a), which the first processor (110a) determines. Further, the third processor (110c) may receive information representing the verification state of the second assembly (130b), which the second processor (110b) determines. Based on received verification states, the third processor (110c) may determine the verification state of the third assembly (130c). In some examples, the third processor (110c) may determine the verification state of the third assembly (130c) further based on interaction between the first assembly (130a) and the second assembly (130b) in accordance with interaction related aspects described for digital entities in this disclosure.

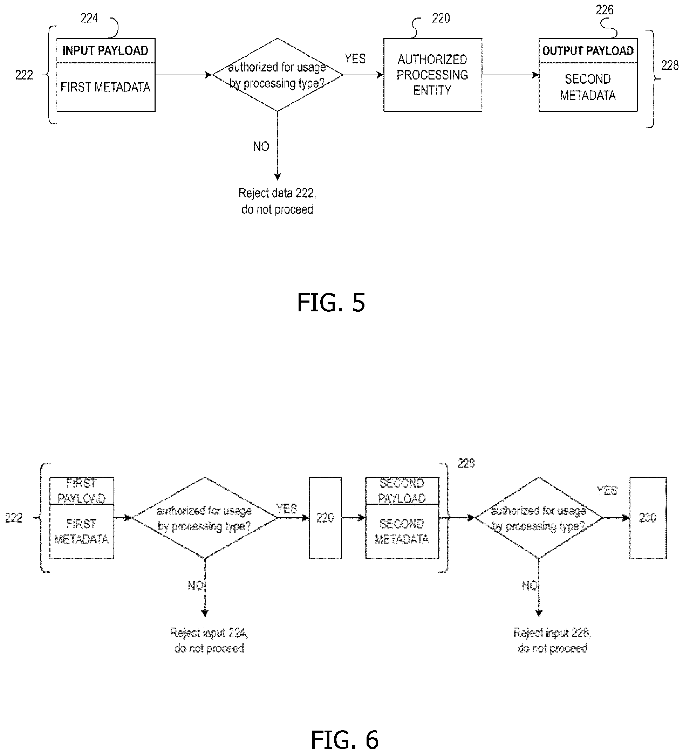

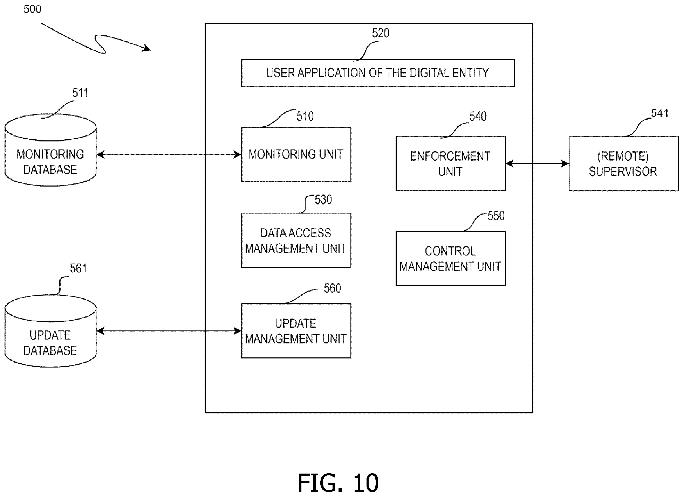

It is to be noted that various aspects described herein for an apparatus including a processor to determine verification state of digital entities, a further apparatus, exemplarily as described in Figures 5-9, and particularly in Figure 10. Therefore, such an apparatus may perform any other aspects described in this disclosure. Illustratively, in accordance with aspects described in Figure 10, a processor of the apparatus may control an access to data associated with digital entities, and/or may monitor an activity of digital entities for data access, and/or send information about monitored activities of digital entities, etc..

As denoted, in addition to the first set of requirements (i.e. product-agnostic requirements), the cybersecurity requirements may also present the second set of requirements (i.e. product-specific requirements) for specific entity types/categories (i.e. verticals). Those entities may involve product, equipment, and/or application categories/types that may need to fulfill a number of product-specific requirements that are essential for those entities to meet in order to comply with the cybersecurity requirements.

A list of entity, product, equipment, and/or application categories/types may be as in Table 6.

| **TABLE 6: Product-specific standards for security requirements relating to the properties of digital entities(see Tab. 1 of [2], items 14-44)** |
|---|
| The CRA SR requires European standard(s) and/or European standardisation deliverable(s) on essential cybersecurity requirements for: |
| 1. identity management systems software and privileged access management software |
| 2. standalone and embedded browsers |
| 3. password managers |
| 4. software that searches for, removes, or quarantines malicious software |
| 5. digital entities with the function of virtual private network (VPN) |
| 6. network management systems |
| 7. network configuration management tools |
| 8. network traffic monitoring systems |
| 9. management of network resources |
| 10. Security information and event management (SIEM) systems |
| 11. updating and patch management, including boot managers |
| 12. application configuration management systems |
| 13. remote access/sharing software |
| 14. mobile device management software |
| 15. physical network interfaces |
| 16. operating systems, including specifically operating systems for servers, desktops, and mobile devices |
| 17. firewalls, intrusion detection and/or prevention systems, including specifically those intended for industrial use |
| 18. routers, modems intended for the connection to the internet, and switches, including specifically those intended for industrial use |
| 19. microprocessors, including specifically general-purpose microprocessors and microprocessors intended for integration in programmable logic controllers and secure elements |
| 20. microcontrollers |
| 21. application specific integrated circuits (ASIC) and field-programmable gate arrays (FPGA) intended for the use by essential entities of the type referred to in [Annex I to the Directive XXX/XXXX (NIS2)] |
| 22. Industrial Automation & Control Systems (IACS), such as programmable logic controllers (PLC), distributed control systems (DCS), computerised numeric controllers for machine tools (CNC) and supervisory control and data acquisition systems (SCADA), including specifically those intended for the use by essential entities of the type referred to in Annex I to the Directive (EU) 2022/2555) |
| 23. Industrial Internet of Things devices, including specifically those intended for use by essential entities of the type referred to in Annex I to Directive (EU) 2022/2555) |
| 24. hypervisors and container runtime systems that support virtualised execution of operating systems and similar environments |
| 25. public key infrastructure and digital certificate issuers |
| 26. secure elements |
| 27. Hardware Security Modules (HSMs) |
| 28. secure cryptoprocessors |
| 29. smartcards, smartcard readers and tokens |
| 30. robot sensing and actuator components and robot controllers |
| 31. smart meters |

Any digital entity, such as product, equipment, component and/or entity of one or multiple of the categories/types given in Table 6, may have additional functionalities about a way that they process an input data. In particular, certain cybersecurity requirements may include certain restrictions to digital entities with respect to data, such that a digital entity may be in compliance with certain cybersecurity requirements (e.g. within the context of Table 6, e.g. the second set of requirements as described above) under designated interactions with designated data.

Illustratively, the cybersecurity requirements may include certain requirements with respect to the data that a digital entity may use, i.e. receive, send, process, etc. Such requirements may include restrictions towards the source of the data or the target of the data. Illustratively, a digital entity may process data received only from digital entities that are compliant to the cybersecurity requirements (e.g. verified digital entities). A digital entity may output data only to digital entities that are compliant to the cybersecurity requirements (e.g. verified digital entities).

Illustratively, the data may be authorized only under designated conditions. For example, the data may be authorized for a type or category of digital entities, such as digital entities described in Table 6 or digital entities included by or associated with products described in Table 6. A type or a category of a digital entity (e.g. a processing entity) may include a type or a category designated for or associated with the digital entity. Illustratively, a type or a category of the digital entity may include a type or a category designated for the digital entity with respect to the operations of the digital entity, noting that multiple types and/or categories may be designated for or associated with the digital entity. For example, for a processing entity, a type or a category of the processing entity may include a type or a category for which the processing entity may process data.

In accordance with various aspects provided herein, data to be exchanged with (i.e. between) digital entities may include a cryptographically bound metadata that may indicate digital entities that are authorized to use the data (i.e. remaining portion of the data carrying data to be sent). Through determining whether data is authorized to be used and/or processed by a digital entity including a processing entity, a processor may maintain the compliance of the processing entity, and in some examples the compliance of the source of the data..

Figure 5 exemplarily illustrates a flow diagram in accordance with the various aspects provided herein. An apparatus, which may be the apparatus 101 described in this disclosure may include a processor (e.g. the processor 110processor 110). The processor 110may identify data including a cryptographically bound metadata as mentioned above. Illustratively the data may include the cryptographically bound metadata portion and a further data portion exemplarily including payload information. In various aspects, the processor 110processor 110 may identify the data stored in a memory in accordance with a received instruction. The processor 110may receive the data including the cryptographically bound metadata. The cryptographically bound metadata may include information indicative of which digital entity or entities are authorized to use the data, in particular, the further data portion (e.g. payload). In other words, any authorization state described herein may be directed to being authorized to use and/or process the payload included in the data. In accordance with various aspects described herein, the information may include type information indicating one or more types and/or categories of digital entities that are authorized to use the data.

The data may be associated with a processing entity. Illustratively, a processing entity may be a digital entity that may process data. In various examples, the processing entity may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processing entity may be implemented in one processing unit, e.g. a system on chip (SOC), or a processor. In some examples the processor processing entity may include one or more cores as computation units, an arithmetic logic unit, a control unit, a storage unit, a plurality of registers. In some examples, the processing entity may be the processor 110 itself, or a processing entity (e.g. a processing core, a computation unit, etc.) of the processor 110. The association may include any type of association through which the processing entity uses the data, illustratively the data may be addressed to the processing entity, the processor 110 may have received an interaction request including (or indicating) the processing entity and the data, the data may be scheduled to be input to the processing entity, or in some examples the data may be scheduled to be output from the processing entity.

For illustration purposes, aspects are described herein with the example of the data being scheduled to be input to the processing entity. The processor 101 may determine whether the processing entity 220 is authorized to use and/or process identified (or received) data 222. Illustratively, the data 222 may be an encapsulated data in a data container. 101 The processor 110 may receive the data 222 including the cryptographically bound metadata (e.g. the first metadata) and input payload 224. The first metadata may include type information of processing entities 220 that are authorized to use and/or process the data 222, in particular to use and/or process the input payload 224. Based on the type information the first metadata may include, the processor 110 may determine an authorization state for the processing entity 220 to which the data 222 may be provided to. The processor 110 may determine an action for the data 224 in accordance with the authorization state of the processing entity 220.

In accordance with various aspects provided herein, the processor 110 may determine whether type information indicates that the data is authorized for a type and/or category designated for the processing entity 220. In some examples, the processor 110 may obtain information of a type and/or category of the processing entity 220 (e.g. from a memory, via an information exchange with the processing entity 220 etc.) and the processor may determine whether the type information indicates that the type and/or category of the processing entity 220 is among the digital entities that are authorized to use and/or process the data 222. Illustratively, the processor 110 may determine that the processing entity 220 is authorized to process the data 222 if the type and/or category of the processing entity 220 matches with, or fall under, the one or more type and/or categories indicated by the type information.

As an example, the first metadata may include a list of categories/types as described in Table 6 for which the data 222 is authorized to be used and/or processed within a boundary associated with the compliance of the CRA with respect to the second set of requirements. The processor 110 may determine whether the processing entity 222 is designated as, or fall under, one of the types and/or categories described in the type information including the list of categories/types as described in Table 6. If the processing entity 222 is designated as such, the processor 110 may determine the authorization state of the processing entity for the data 222 as an authorized processing entity.

The first metadata may include further information that may indicate or may be related to digital entities that are authorized to process the data 222. Similar to the aspects described in accordance with Figures 1-4, the first metadata may include a compliance statement associated with the source entity of the data 222 or a previous processing entity or entities that have processed the data 222 within a processing chain. For example, the first metadata may include a proof of compliance to relevant product-specific requirements presented by the cybersecurity requirements for the categories/types defined in Table 5, as exemplified in accordance with aspects described Figures 1-4. In some examples, the metadata may also include information representing one or more of the source of the data, and/or the date of creation of the data, and/or an expiration date of the data, a lifetime of the data, and/or usage conditions indicating the specific entities that may be authorized to use the data, and the like.

In accordance with various aspects provided herein, the processor 110processor 110 may determine a configuration based on the authorization state of the processing entity 220. Illustratively, in one configuration, when the processing entity 220 is an authorized processing entity, the processor 110processor 110 may allow the processing entity 220 to use and/or process the data 222. Accordingly, the processor 110processor 110 may determine a configuration of a communication and/or access operation in which the processing entity 220 may access and/or receive the data 222.

In some aspects, the processor 110 may reject the data 222 if the processor 110 determines that the processing entity 220 is not authorized to use and/or process the data 222. In other aspects, the processor 110 may be configured to accept the data 222 if the processor determines that the processing entity 220.is authorized to use and/or process the data 222. In that case, the processor 110 may configure the processing entity 220 using/processing the data 222 and instruct the processing entity 220 to process the data 222.

In some examples, the processing entity 220 may process the data 222 and output processed data 228. The output data 228 may include output payload 226. Noting that maintaining the compliance to the cybersecurity requirements associated with a processing chain including a processing associated with the data 222 may be desired. Accordingly, the output data 228 may include a cryptographically bound metadata as well. In some aspects described herein, the output data 228 from the processing entity 220 may include the same metadata received with the data 222, i.e. the first metadata.

In an example, the processing entity 220 may perform a processing of the data 222 which may include generating a cryptographically bound second metadata to be included to the output data 228. Illustratively, the processing entity 220 may process the input payload 224 and output of the processing may include output payload 226. The processing entity 220 may accordingly obtain the output data 228 including the output payload 226 and the second metadata. The second metadata may include type information, as described above for the data 222, that is generated by the processing entity 220 in accordance with a compliance of the processing entity to the cybersecurity requirements. The second metadata may further include information that may indicate or may be related to further digital entities that are authorized to process the output data 228.

Similar to the aspects described in accordance with Figures 1-4, the second metadata may include a compliance statement associated with the source entity of the data 222 or a previous processing entity or entities that have processed the data 222 within a processing chain, and in particularly a compliance statement of the processing entity 220. For example, the second metadata may include a proof of compliance to relevant product-specific requirements presented by the cybersecurity requirements for the categories/types defined in Table 5, as exemplified in accordance with aspects described Figures 1-4, of the processing entity 220. In some examples, the second metadata may also include information representing one or more of the source of the data, and/or the date of creation of the data, and/or an expiration date of the data, a lifetime of the data, and/or usage conditions indicating the specific entities that may be authorized to use the data, and the like.

In some examples, the processor 110 may generate the second metadata, in a manner that is described for the processing entity 220. The processor 110 may communicate with the processing entity 220 to obtain necessary information to generate the second metadata as described herein, which may include cryptographic information required to bind the second metadata cryptographically.

The processing entity 220 may add the generated second metadata to a readily available first metadata through a blockchain-based approach or by adding cryptographically bound metadata to the first metadata to an existing container 228 to create a second metadata. In another example, the second metadata may replace the first metadata or in some examples, the processing entity 220 may simply add the second metadata in a second container that is different from the container of the first metadata. In an example, the second metadata may include the first metadata.

Figure 6 shows an exemplary illustration of a flow of data in some aspects. Any aspects described herein with respect to Figure 5 may also apply aspects described herein. The data 222 may be authorized to be used for multiple categories, such as the categories given in Table 6. In that case, the processor 110 may determine the authorization state of the processing entity 220 to use and/or process the data 222 to obtain a result as described. Furthermore, the output data 228 may also be subjected to a processing by a further processing entity 230.

As denoted, a consideration for a further processing of the output data 228 may be present in some cases, and the output data 228 described above correspond to the output of the processing entity 220. In such a case, the criteria for authorization of a further processing entity 230 to use and/process the output data 228 may be related to both the information that the first metadata includes and the authorization information of the processing entity 220. In an example, the processor 110 may determine whether the further processing entity 230 may process the output data 228 in accordance with the aspects described herein based on the authorization state of the further processing entity 230. In accordance with aspects described herein, in particular with respect to Figure 5, the processor 110 may perform operations associated with the determination of the authorization state of the further processing entity 230 and performing associated with the authorization state of the further processing entity 230 for data to be input to the further processing entity 230, in a similar manner.

In a non-limiting example, the processor 110 may determine whether the further processing entity 230 is a processing entity of a type or category of products provided within type information included in a cryptographically bound metadata of the output data 228. Illustratively, the processor 110 may determine whether a type or category of the further processing entity 230 matches with one or more types and/or categories indicated in the type information of included in the cryptographically bound metadata of the output data 228. In light of the aspects described for the metadata of the output data 228, which may be the second metadata including the first metadata, the processor 110 may use the first metadata and the second metadata included in the output data 228 to determine the authorization state of the further processing entity 230. It is to be noted that through this approach, the compliance of the whole processing chain may be maintained.

The processor 220 may allow the output data 228 to be used and/or processed by the further processing entity 230 if the processor 110 determines that the further processing entity 230 is authorized to process the output data 228. The processor may reject the use and/or process of the output data 228 by the further processing entity 230 if the processor 110 determines that the further processing entity 230 is not authorized.

Illustratively, the data 222 may be authorized for using and/or processing by types or categories of a first set including first types {type 1, type 2 , type 3 , type 4}, illustratively among the list given in Table 6. In other words, type information included in the data 222 may indicate the first types. Accordingly, the processing entity 220 to which the data 222 is provided may be authorized for the types/categories of a second set including second types {type 2, type 3, type 5, type 6 , type 7} among the list given in Table 6. In other words, types and/or categories of the processing entity may include the second types. In that case, the output data 226 may only be authorized for processing by the types represented by the intersection of the first and second set. That is, the further processing entity 230 may only process the output 226, provided that the further processing entity 230 is authorized for at least one of the overlapping types of the first and second set.

For this purpose, the data 222 may include further information indicating for which type or category of available types or categories is the data 222 to be used or processed. Additionally, or alternatively, the processor 110 may receive the further information via another means, such as based on a received processing request associated with the processing of the data 222, based on an instruction received from the source of the data 222 or from a previous processing entity that has processed the data 222.

Based on the further information described above, the processor 110 may determine the authorization state of the processing entity 220 in accordance with aspects described herein. Illustratively with the examples above, if the further information indicates that the use and/or processing of the data 222 is for type 2, or type 3, the processor 110 may allow the processing entity 220 to use and/or process the data 222. If the further information indicates that the use and/or processing of the data 222 is for type 1 or type 4, the processor 110 may reject the use and/or processing of the data by the processing entity 220.

In some aspects, there may be multiple further processing entities, such that each processing entity may process an output of a preceding processing entity, and provide its output to a following processing entity. Therefore, In case that there is a chain of processing entities under control of distinct stakeholders (i.e. digital entities designated to control authorization states and operations associated with the authorization states as described herein), then input data must be verified again in all cases and intermediate output data must be complemented with the corresponding proofs that all processing is done in accordance with the "essential requirements" for the target product/equipment/entity/component types/categories as defined in Table 6, the essential requirements representing the second set of requirements or product-agnostic requirements in accordance with the cybersecurity requirements.

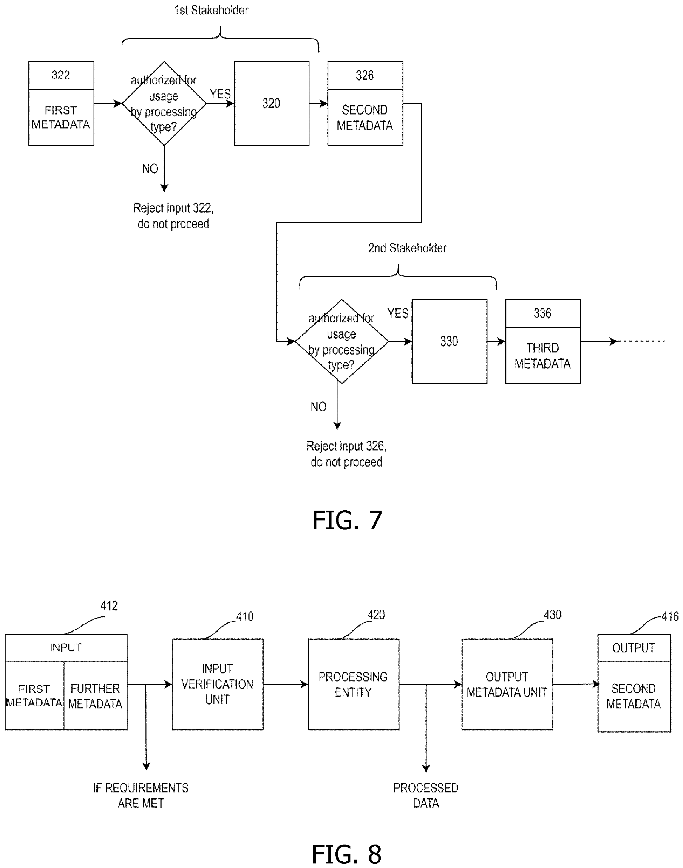

Figure 7 shows an exemplary illustration associated with a data flow. In this illustration, a plurality of processing entities and a chain processing operation under control of distinct stakeholders are displayed. Illustratively, stakeholders may include the processor 110 itself in a disaggregated operation, and alternatively or additionally another processor or processors which are configured to perform as the processor 110 described herein. The processor 110 again may determine whether to accept an input data 322 for a first processing entity 320 to use and/or process and accordingly whether the first processing entity 320 is authorized the use and/or process the input data 322. Since there may be a plurality of processing entities under the control of distinct stakeholders, the processor 110 may determine whether a second processing entity 330 is authorized to use and/or process a first intermediate output 326. Based on the result of the determination, the processor 110 may accept or reject the first intermediate output 326 for the second processing entity 330 to use and/or process. In an example, the second processing entity 330 may be authorized to use and/or process the first intermediate output 326 to generate a second intermediate output 336. The processor may determine whether a third processing entity 340 is authorized to use and/or process the second intermediate output 336 The process may follow this procedure until a resulting output is obtained due to a rejection of an intermediate output (e.g. the corresponding processing entity is determined to be not authorized) or the absence of a subsequent processing entity, etc.

Illustratively, the data 222 may be authorized for processing by the types/categories of set A including the types {type 1, type 2, type 3, type 4} among the list given in Table 6. Accordingly, the first processing entity 320 to which the input 322 is provided may be authorized for the types/categories of set B including the types {type 2, type 3, type 4, type 5, type 6, type 7} among the list given in Table 6. It may be evident that the first intermediate output 326 may only be processed by a second processing entity 330, to which the first intermediate output 326 may be provided, authorized for the types representing the overlapping types of the set A and set B, namely types {type 2, type 3, type 4}.

Furthermore, the second processing entity 330 may be authorized for the types of set C including types {type 1, type 2, type 4, type 8, type 9} among the list given in Table 6. Thus, the second intermediate output 336 may only be processed by a third processing entity 340 authorized for the types representing the overlapping types of set A, set B and set C, namely types {type 2, type 4}.

Figure 8 illustrates an example including logical blocks for data processing in accordance with various aspects described herein. Aspects described herein, in particular in Figures 5-7, apply. In some examples, an input verification unit 410 may determine whether an input data 412 (e.g. the data) meets the cybersecurity requirements and thus authorized to be processed by an authorized processing entity 420 (e.g. the processing entity 220). For example, the input verification unit 410 may be a processor, a part/core of a processor, or include a processor to receive the input data 412 including cryptographically bound metadata (i.e. the first metadata) and may determine whether the input data 412 is authorized for processing. In particular, the input verification unit 410 may correspond to various aspects described for the processor 110 in this disclosure. In cases where the input verification unit 410 determines that the input data 412 is authorized, a second unit, the output metadata unit 430, may receive a processed data 414 representative of data processed by the processing entity 420. The output metadata unit 430 may also be a processor, part/core of a processor, or include a processor. As described above, the processor 110 or the processing entity 420 itself, or another processor may be the output metadata unit 430.

The output metadata unit 430 may add relevant metadata to an output 426. The relevant metadata may include information for which entity type(s) given in Table 6 the output 416 is authorized to be used. Thus, the output 416 may include a second metadata cryptographically bound to output 416. The input verification unit 410 and output metadata unit 430 may be different parts/cores of the same processor. The input verification unit 410 and output metadata unit 430 may also be distinct processors or parts/cores of distinct processors. The input verification unit 410 and output metadata unit 430 may include distinct processors.

In case the input verification unit 410 determines that the input data 412 is authorized for processing, then the input verification unit 410 may forward the input data 412 to the processing entity 420. Otherwise, in cases where the input verification unit 410 may not verify the input data 412 as it may not meet the requirements of the cybersecurity requirements, then the input verification unit 410 may discard the input data 412 to prevent it from being processed by the processing entity 420.

As illustrated herein, the processing entity 420 may be coupled to the input verification unit 410 and the output metadata unit 430. Upon successful verification of the input data 412 indicating that the data is authorized for processing by the processing entity 420, the processing entity 420 may use and/or process the input data to form/generate the processed data 414. The output metadata unit 430 may receive the processed data 414 to add relevant metadata to generate the second metadata cryptographically bound to output 416. The relevant metadata may include type information the output 416 is authorized to be used, in accordance with the list given in Table 6.

Referring back to aspects described in Figures 4-6, in accordance with the various aspects provided herein, a second regulation and its corresponding requirements may accompany the regulation and the requirements of the cybersecurity requirements. In other words, the cybersecurity requirements may include requirements of a further cybersecurity related regulation, such as the artificial intelligence (AI) regulation or AI requirements as described in this disclosure, which may include certain requirements directed to a list including high-risk applications. High risk applications herein may refer to any AI application considered to possess a high level of risk of running according to the AI requirements.

High-risk applications referenced above may include digital entities associated with an AI system that is intended to be used as a safety component of a product, or is itself a product, and/or digital entities whose safety component is the AI system, or the AI system itself as a product. In particular, high-risk applications may include software components of digital entities, in which the software components are included, or intended to be included or configured to perform an operation with respect to matters listed in Table 8.

| **TABLE 8: High-risk applications** |
|---|
| 1. Biometric identification and categorisation of natural persons: (a) AI systems intended to be used for the 'real-time' and 'post' remote biometric identification of natural persons; 2. Management and operation of critical infrastructure: (a) AI systems intended to be used as safety components in the management and operation of road traffic and the supply of water, gas, heating and electricity. 3. Education and vocational training: (a) AI systems intended to be used for the purpose of determining access or assigning natural persons to educational and vocational training institutions; (b) AI systems intended to be used for the purpose of assessing students in educational and vocational training institutions and for assessing participants in tests commonly required for admission to educational institutions. 4. Employment, workers management and access to self-employment: (a) AI systems intended to be used for recruitment or selection of natural persons, notably for advertising vacancies, screening or filtering applications, evaluating candidates in the course of interviews or tests; (b) AI intended to be used for making decisions on promotion and termination of work-related contractual relationships, for task allocation and for monitoring and evaluating performance and behavior of persons in such relationships. 5. Access to and enjoyment of essential private services and public services and benefits: (a) AI systems intended to be used by public authorities or on behalf of public authorities to evaluate the eligibility of natural persons for public assistance benefits and services, as well as to grant, reduce, revoke, or reclaim such benefits and services; (b) AI systems intended to be used to evaluate the creditworthiness of natural persons or establish their credit score, with the exception of AI systems put into service by small scale providers for their own use; (c) AI systems intended to be used to dispatch, or to establish priority in the dispatching of emergency first response services, including by firefighters and medical aid. 6. Law enforcement: (a) AI systems intended to be used by law enforcement authorities for making individual risk assessments of natural persons in order to assess the risk of a natural person for offending or reoffending or the risk for potential victims of criminal offences; (b) AI systems intended to be used by law enforcement authorities as polygraphs and similar tools or to detect the emotional state of a natural person; EN 5 EN (c) AI systems intended to be used by law enforcement authorities to detect deep fakes as referred to in article 52(3); (d) AI systems intended to be used by law |
| enforcement authorities for evaluation of the reliability of evidence in the course of investigation or prosecution of criminal offences; (e) AI systems intended to be used by law enforcement authorities for predicting the occurrence or reoccurrence of an actual or potential criminal offence based on profiling of natural persons as referred to in Article 3(4) of Directive (EU) 2016/680 or assessing personality traits and characteristics or past criminal behaviour of natural persons or groups; (f) AI systems intended to be used by law enforcement authorities for profiling of natural persons as referred to in Article 3(4) of Directive (EU) 2016/680 in the course of detection, investigation or prosecution of criminal offences; (g) AI systems intended to be used for crime analytics regarding natural persons, allowing law enforcement authorities to search complex related and unrelated large data sets available in different data sources or in different data formats in order to identify unknown patterns or discover hidden relationships in the data. 7. Migration, asylum and border control management: (a) AI systems intended to be used by competent public authorities as polygraphs and similar tools or to detect the emotional state of a natural person; (b) AI systems intended to be used by competent public authorities to assess a risk, including a security risk, a risk of irregular immigration, or a health risk, posed by a natural person who intends to enter or has entered into the territory of a Member State; (c) AI systems intended to be used by competent public authorities for the verification of the authenticity of travel documents and supporting documentation of natural persons and detect non-authentic documents by checking their security features; (d) AI systems intended to assist competent public authorities for the examination of applications for asylum, visa and residence permits and associated complaints with regard to the eligibility of the natural persons applying for a status. 8. Administration of justice and democratic processes: (a) AI systems intended to assist a judicial authority in researching and interpreting facts and the law and in applying the law to a concrete set of facts. |

As an example, the requirements of an AI regulation such as the European AI Act could include specific cybersecurity requirements, while the cybersecurity requirements specified by a cybersecurity regulation (e.g. the CRA) may specifically point out a joint application in which AI application takes place within a digital entity. Thus, a container encapsulating data including a cryptographically bound metadata (i.e. a first metadata) in line with the regulation may also include a cryptographically bound further metadata (i.e. an accompanying metadata) associated with the AI requirements.

The accompanying metadata may include a list of high-risk AI applications for which the data may be authorized for processing. The accompanying metadata may further include a proof of compliance to a set of requirements for running/executing high-risk AI applications as given in the AI requirements. The accompanying metadata may further include one or more of source of the data, date of creation of the data, date of expiration of the data, usage conditions, information on cleanup of the data, information on labelling of the data, information on preprocessing of the data, and the like.

In some aspects, the processor 110 may need to determine whether the data is authorized for processing by the processing entity 220 based on the information in the first metadata and the accompanying metadata. Thus, there may be different cases for the processor 110 to determine whether the processing entity 220 may use and/or process the data (i.e. input data) based on the information that each metadata contains.

In some aspects, the processing entity 220 may be any of the product and/or component categories/types given in Table 6, and the same processing entity 220 may run/execute one or more of the high-risk applications described in the AI requirements. In this case, the processor 110 may determine the processing entity 220 is authorized to use and/or process the input data if the input data meets the product-specific requirements specified for the categories/types given in Table 6 associated with the cybersecurity requirements as well as the set of requirements associated with the AI requirements.

In another aspect, the processor 110 may determine that the processing entity 220 may use and/or process the input data if the input data meets the product-specific requirements associated with the cybersecurity regulation. Based on this criterion, the processor 110 may bypass the determination of whether the set of requirements associated with the AI regulation is also satisfied and may assume that the processing entity 220 is authorized.

In another aspect, the processing entity 220 may be any of the product and/or component categories/types given in Table 6, but the same processing entity 220 may not run/execute one or more of the high-risk applications defined in the AI requirements. In such a case, the processor 110 may determine that the processing entity 220 is authorized to use and/or process the input data if the input data meets product-specific requirements associated with the cybersecurity regulation. The content of the further metadata may be irrelevant for this case as the processing entity 220 may not be associated with running a high-risk application.

In another aspect, the processing entity 220 may not be any of the product and/or component categories/types given in Table 6, but the same processing entity 220 may run/execute one or more of the high-risk applications defined in the AI requirements. In that case, the processor 110 may determine that the processing entity 220 is authorized to use and/or process the input data if the input data meets the product-agnostic requirements (i.e. the first of requirements) associated with the cybersecurity regulation and the set of requirements associated with the AI regulation.

In another aspect, the processing entity 220 may not be any of the product and/or component categories/types given in Table 6, and the same processing entity 220 may not run one or more of the high-risk applications defined in the AI regulation. In such a case, the processor 110 may determine that the processing entity 220 is authorized to use and/or process the input data if the input data meets the product-agnostic requirements (i.e. the first set of requirements) associated with the cybersecurity regulation. The content of the further metadata may be irrelevant for this case as the processing entity 220 may not be associated with running a high-risk application.

According to various aspects of this disclosure, the processor 110 may determine that the processing entity 220 is not authorized to use and/or processing the input data if the input data does not meet (or only meets in part) corresponding requirements associated with the cybersecurity requirements and/or the AI requirements.

In an example, a product may be an industrial internet of things (IIoT) product whose type is given in Table 6 as Industrial Internet of Things devices, including specifically those intended for use by essential entities of the type referred to in Annex I to Directive (EU) 2022/2555). For instance, the IIoT product may be used for a management and operation of critical infrastructure. The management and operation of critical infrastructure may relate to a category in the AI requirements or AI regulation. The category may be defined as "AI systems intended to be used as safety components in the management and operation of road traffic and the supply of water, gas, heating and electricity". The definition of category may link to the high-risk applications defined by the AI requirements/Al regulation. In that case, the IIoT product may be one of the specific products listed in Table 5. Furthermore, the IIoT product may also be related with products involving one or more digital entities that run high-risk AI applications. Consequently, an input data for a corresponding digital entity may need to meet both product-specific requirements and the set of requirements associated with the AI requirements/AI regulation.

In one configuration which the processor 110 may determine, when the processing entity 220 is an unauthorized processing entity, the processor 110 may prevent the processing entity 220 to use and/or process the data 222. Accordingly, the processor 110 may determine a configuration of a communication and/or access operation in which the processing entity 220 does not access and/or receive the data 222. Further, if the processing entity is an unauthorized processing entity, the processor may, in response to a received processing request (which may be received from the source digital entity of the data 222 or another digital entity), select a processing entity that is an authorized processing entity from a plurality of available processing entities. In order to maintain the compliance to the cybersecurity requirements, the processor 110 may re-route, based on the received processing request, the data associated with a processing of the unauthorized processing entity, to another processing entity that is authorized. The processor 110 may perform the re-routing based on information about processing entities (e.g. functions, input and outputs, their authorization status, etc.) stored in a memory.

Illustratively, the processor 110 may identify the data 222 including the type information including a list of categories/types, for example as described in Table 6, for which the data 222 is authorized to be used and/or processed within a boundary associated with the compliance of the CRA with respect to the second set of requirements, and which the data 222 is to be processed by a first processing entity. The processor 110 may determine that the processing entity is an unauthorized processing entity and the processor 110 may select another processing entity, based on the information about processing entities stored in the memory, which illustratively indicates that a second processing entity may provide the same service of the first processing entity and the second processing entity is an authorized processing entity.

For this purpose, the processor 110 may store information representing verification and/or authorization states of the plurality of processing entities in a memory. Furthermore, the processor 110 may store various constrains and features associated with services provided by the processing entities, illustratively, type of processing, function of processing, constraints of input data for processing, input data type, constraints of output processed data, output data type, information suitable to include within the input data, information to be included in the output processed data, etc. The processor 110 may accordingly identify suitable processing entities for an identified data based on the constraints and features associated with the services provided by the plurality of processing entities.

Accordingly, the processor 110 may maintain the information representing verification and/or authorization states of the plurality of processing in the memory. This information may further indicate for which types or categories that the respective processing entities are authorized for. In some aspects, the information may further include for which types of applications that the processing entities may execute, in particular, whether they are high-risk AI applications.

Referring back also to Figures 3 and 4, in some examples, one or more processing entities (e.g. the processing entity 220) may form an assembly with one or more digital entities (e.g. the digital entity 120). Illustratively, the one or more digital entities may include an AI application as software component. In some examples, the processor 220 may receive a request of an assembly. The request of the assembly may illustratively be an instruction to identify one or more processing entities for processing of one or more digital entities, i.e. determining one or more processing entities to combine with one or more digital entities to form an assembly. The one or more digital entities may be associated with a type or a category as described in accordance with Figures 5-7, illustratively, one or more types or categories provided in Table 6.

The processor 110 may, based on received request of an assembly, select one or more processing entities from a plurality of available processing entities based on the cybersecurity requirements associated with the one or more digital entities and verification states of the processing entities. Illustratively, the processor 110 may select one or more processing entities that are verified processing entities for the one or more digital entities associated with certain types or categories (e.g. one or more types or categories provided in Table 6). The processor 110 may accordingly form an assembly including the one or more digital entities and selected one or more processing entities. Should the processor 110 fails to identify a processing entity that are compliant to cybersecurity requirements associated with the one or more digital entities, the processor 110 may reject the assembly request.

Illustratively, the apparatus may include a laptop with i) one or multiple CPUs/memory components/accelerators/etc. that are compliant with designated cybersecurity requirements (e.g. requirements associated with the CRA, requirements associated with the AI Act, etc.) and ii) one or multiple CPUs/memory components/accelerators/etc. are not compliant with the cybersecurity requirements, for example for types and/or categories listed in Table 6.

If one of the applications is required to be executed as listed in a type or a category provided in Table 6 (for example "standalone and embedded browsers"), then the processor 110 may select one or multiple CPUs/memory components/accelerators/etc. that are compliant with designated cybersecurity requirements and form the assembly accordingly for the interaction between the application and the selected entities, i.e. the selected entities may execute the application. In case that the processor 110 identifies no such compliant component then the processor 110 may reject processing/execution of the application.

If an application is required to be executed as a type or a category that is NOT listed in Table 6, then the processor 110 may select one or multiple CPUs/memory components/accelerators/etc. are not compliant with the cybersecurity requirements, which may still be compliant with product-agnostic cybersecurity requirements. In case that no such compliant component is available then the processing/execution of the application is rejected.

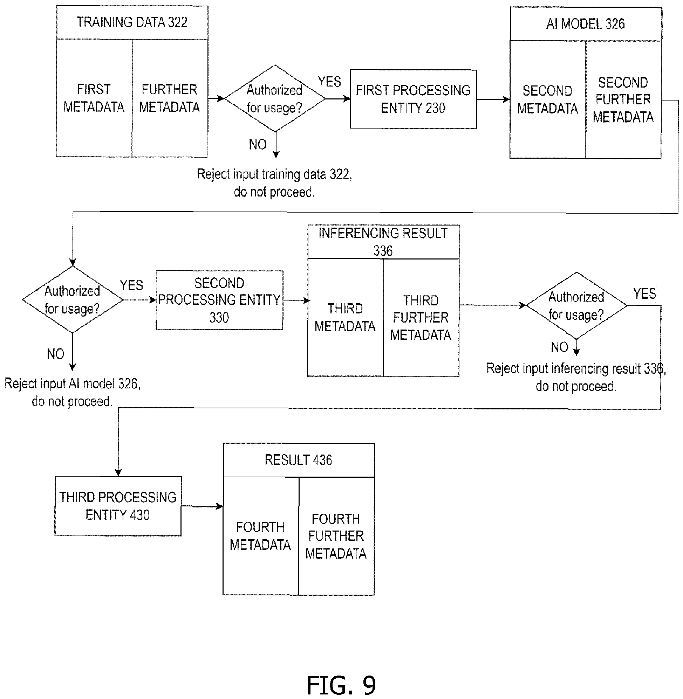

Figure 9 illustrates schematically an example of a flow diagram associated with AI requirements that can be performed within the apparatus 101. Aspects described herein may be in particular combined with aspects described in Figures 4-8. The illustration includes a plurality of digital entities depending on whether they are authorized to use/process the corresponding input data. A collection of AI training data may be an initial input data provided to a first processing entity 230. In an example, the collection of AI training data 322 may include a plurality of measurements collected from a field. The collection of AI training data 322 may be stored in a container. The container may include a cryptographically bound metadata (i.e. the first metadata) including type information of a processing entity (e.g. an AI model trainer) for which the data is authorized for processing. The first metadata further includes a proof of compliance in accordance with the product-specific requirements. A cryptographically bound further metadata (i.e. the accompanying metadata) may include the list of high-risk AI applications for which the data may be authorized for processing as well as a proof of compliance to a set of requirements for high-risk AI applications as described in the AI requirements.

The processor 110 may determine whether the first processing entity 230 (e.g. a type of AI model trainers) may use and/or process the AI training data (i.e. the first input data). If the processor 110 determines that the first processing entity 230 is authorized to use and/or process the first input data 322, it may forward the first input data 322 to the first processing entity 230. However, if the processor 110 determines that the first processing entity 230 is not authorized to use and/or process the first input data 322, it may reject the first input data 322 to prevent it from processing by the first processing entity 230.

The first processing entity 230 may process the first input data 322 to cause a first processed data 326. The first processed data may be a trained AI model. A second container may store the first processed data 326. The second container may include a cryptographically bound metadata including type information of a processing entity (e.g. a type of inferencing entities) for which the data is authorized for processing. The metadata further include a proof of compliance in accordance with the product-specific requirements. An additional metadata stored in the second container may include the list of high-risk AI applications for which the data may be authorized for processing as well as a proof of compliance to a set of requirements for high-risk AI applications as given in the AI regulation.

The processor 110 may determine whether the second processing entity 330 (e.g. a type of inferencing entities) may use and/or process the AI Model data. If the processor 110 determines that the second processing entity is authorized to use and/or process the first processed data 326, it may forward the first processed data 326 to the second processing entity 330. However, if the processor 110 determines that the second processing entity 330 is not authorized to use and/or process the first processed data 326, it may reject the first processed data to prevent it from processing by the second processing entity 326.

The chain shown in Figure 7 may be extended with plurality of entities, such as a third processing entity 340, that may execute plurality of processed data, such as the second processed data 336, to generate a result 436. A corresponding container may store the result 436 with one or more cryptographically bound metadata. The metadata may include a proof of compliance indicating that the result 436 is generated by meeting the corresponding requirements that may be dictated by either cybersecurity requirements/regulation or both the cybersecurity requirements/regulation and the AI requirements/regulation.

In some examples, a malicious attack may attempt to revert the results associated with forwarding/rejecting an input data. To increase security, the processor 110 may determine a result, concerning forwarding an input data to a corresponding entity or rejecting the input data and/or concerning whether a corresponding processing entity is authorized to process the input data, within a trusted execution environment (TEE) such as Intel's SGX.

In accordance with the various aspects provided herein, a product or an entity may need to comply with the product-agnostic requirements, regardless of its type/category, manufacturer, maintainer, vendor, etc. However, keeping a track of compliance of a digital entity may not be straight-forward. An arrangement may be provided to determine whether a digital entity is compliant with the product-agnostic requirements.

The requirements may include the following as shown in Table 7:

| **Table 7**: **Product-agnostic standards for security requirements relating to the properties of products with digital elements (see Tab. 1 of [2], items 1-13)** |
|---|
| 1. European standard(s) and/or European standardisation deliverable(s) on delivering products with digital elements without any known exploitable vulnerabilities |
| 2. European standard(s) and/or European standardisation deliverable(s) on delivering products with digital elements with a secure by default configuration, including the possibility to reset the product to its original state |
| 3. European standard(s) and/or European standardisation deliverable(s) on ensuring protection of products with digital elements from unauthorised access by appropriate control mechanisms, including but not limited to authentication, identity or access management systems |
| 4. European standard(s) and/or European standardisation deliverable(s) on protecting the confidentiality of data, personal or other, stored, transmitted or otherwise processed by a product with digital elements, such as by encrypting relevant data at rest or in transit by state of the art mechanisms |
| 5. European standard(s) and/or European standardisation deliverable(s) on protecting the integrity of personal or other data, commands, programs by a product with digital elements, and its configuration against any manipulation or modification not authorised by the user, as well as reporting on corruptions |
| 6. European standard(s) and/or European standardisation deliverable(s) on processing only personal or other data that are adequate, relevant and limited to what is necessary in relation to the intended use of the product with digital elements (`minimisation of data') |
| 7. European standard(s) and/or European standardisation deliverable(s) on protecting the availability of essential functions of the product with digital elements, including resilience against and mitigation of denial of service attacks |
| 8. European standard(s) and/or European standardisation deliverable(s) on minimising the negative impact of a product with digital elements on the availability of services provided by other devices or networks |
| 9. European standard(s) and/or European standardisation deliverable(s) on designing, developing and producing products with digital elements with limited attack surfaces, including external interfaces |
| 10. European standard(s) and/or European standardisation deliverable(s) on designing, developing and producing products with digital elements that reduce the impact of an incident using appropriate exploitation mitigation mechanisms and techniques |
| 11. European standard(s) and/or European standardisation deliverable(s) on providing security related information by recording and/or monitoring relevant internal activity of products with digital elements, including the access to or modification of data, services or functions |
| 12. European standard(s) and/or European standardisation deliverable(s) on ensuring that vulnerabilities in products with digital elements can be addressed through security updates, including, where applicable, through automatic updates and the notification of available updates to users. |

Figure 10 illustrates schematically an example of a device 500 for ensuring the compliance of a corresponding digital entity 120 through which the digital entity 120 may be verified. Illustratively, the device 500 may include the apparatus 101 described herein. The architecture may include a monitoring unit 510 whose functional use may be associated with the product-agnostic requirements of the cybersecurity requirements. The monitoring unit 510 may be implemented by a processor 110 or a part/core of a processor 110, such as the one described in the disclosure. The monitoring unit 510 may be a logical unit, when executed by the processor 110, causes the processor 110 to monitor and/or record one or more activities associated with the one or more digital entities 120 couplable to the processor 110. The monitored activities may refer to data representative of internal operation data associated with the corresponding digital entities 120.

The monitoring unit 510 may, monitor, record and/or encode the data. In some cases, the monitoring unit 510 may determine to store the data. In case of a malicious attack or other alerting events such as malfunctioning of the digital entity 120, the monitoring unit 510 may use the data to trace back the issue. In some cases, the monitoring unit 510 may transmit data to or receive data from a database 511. In some examples, the monitoring unit 510 may transmit the monitored activities and/or monitored internal operations to the database 511. The database 511 may be an external database operated by an authority, one or more manufacturers of the corresponding digital entities 120, or trusted third parties. In some examples, the database may be a monitoring database 511 and may include a log of internal operations relating to one or more digital entities 120. Illustratively, a log of an attempt to use the digital entity 120 may be encoded and transmitted to the external database.

The device 500 may further include a user application 520, whose functional use may be associated with the product-agnostic requirements of the cybersecurity requirements, designated to offer functionality, service, and/or application of one or more digital entities 120 to an end-user. The digital entity 120 in that sense may include a user interface that may accept, via the processor 110, input from the end-user and/or produce, via the processor 110, outputs to the end-user. The user interface may be a graphical user interface (GUI), a command line interface, or any other interface that the end-user may interact with. The corresponding digital entities may need to be in a category representative of compliant digital entities to ensure an enhanced level of cybersecurity to the end user in comparison to those digital entities conflicting with the product-agnostic requirements described in the cybersecurity requirements.

The device 500 may further include a data access management unit 530 whose functional use may be associated with the product-agnostic requirements of the cybersecurity requirements. The data access management unit 530 may be a processor 110 or part/core of the processor 110. The data access management unit 530 may also be a logical unit, when executed by a processor 110, causes the processor 110 to control access to data associated with one or more digital entities 120 couplable to the processor 110 according to a set of requirements associated with the cybersecurity requirements.

In some examples, the data access management unit 530 may determine to restrict the data accessed by the corresponding digital entity 120 to preserve the data integrity through which the confidentiality of private data is protected. The term private data may include personal data and/or any type of data that is redundant to execute a corresponding task. In some cases, one or more digital entities may need to access the private data to perform a specific task. The data access management unit 530 may then determine to request explicit authorization from the user indicating an access to and/or modification of the private data is requested.

In some aspects, the device 500 may include an enforcement unit 540 whose functional use may be associated with the product-agnostic requirements of the cybersecurity requirements. The enforcement unit 540 may itself be a processor 110 or part/core of the processor 110. The enforcement unit may also be a logical unit that, when executed by a processor 110, causes the processor 110 to determine whether an access request to the private data may be linked with a suspected event. In that case, the enforcement unit 540 may determine to interrupt an ongoing operation to prevent an exploit of the private data due to a potential cybersecurity-related vulnerability. The enforcement unit 540 may interact with a supervisor 541 to issue a warning about the interruption of the corresponding process.

The device 500 shown in Figure 10 may include a control management unit 550 whose functional use may be associated with the product-agnostic requirements of the cybersecurity requirements. The control management unit 550 may itself be a processor 110 or part/core of the processor 110. The control management unit 550 may also be a logical unit that, when executed by a processor 110, causes the processor 110 to determine an authorization state for one or more users attempting to access the corresponding digital entity 120.

In some aspects, the control management unit 550 may determine to classify a user attempting to access the digital entity 120 by controlling user credentials. In some aspects, the control management unit 550 may determine to classify a user attempting to access the digital entity 120 as a non-authorized user. In that case, the control management unit 550 may prevent the user from accessing to the corresponding digital entity 120. In other aspects, the control management unit 550 may determine to classify the user attempting to access the digital entity 120 as an authorized user. In that case, the control management unit 550 may allow the user to access the digital entity 120.

In some examples, the control management unit 550 may further determine a user authorization level and/or an access level. The user authorization level may indicate a privilege level for using and/or operating the digital entity. In some cases, the control management unit 550 may determine that the user can only access limited applications of the digital entity 120. In other cases, the user may be determined as a superuser who may access to even engineering, supervision, and/or developer functionalities of the digital entity 120.

The device 500 shown in Figure 10 may include an update management unit 560 whose functional use may be associated with the product-agnostic requirements of the cybersecurity requirements. The update management unit 560 may itself be a processor 110 or part/core of the processor 110. The update management unit 560 may also be a logical unit that, when executed by a processor 110, causes the processor 110 to interact with a further external database.

The further external database may be an update database 561 that may contain mandatory and/or critical updates associated with the digital entity 120 to mitigate potential vulnerabilities that may be exploited by a malicious attack. In some aspects, the update database 561 may be under the control of an authority, such as the government. The processor may check the current specifications of the digital entity 120 to detect a suspected vulnerability. The update management unit 560 may report the suspected vulnerability to the update database 561. A security update may be addressed to mitigate the suspected vulnerability. In some examples, the update management unit 560 may receive information about the presence of an update from the update database 561, may decode the information and may execute the installation of the update. In some examples, the update management unit 560 may notify the user about the presence of an update.

In accordance with various aspects disclosed herein, a vulnerability handling method may be provided for the digital entity 120. The vulnerability handling may be related to the compliance of the digital entity with the cybersecurity requirements optionally along with the AI requirements.

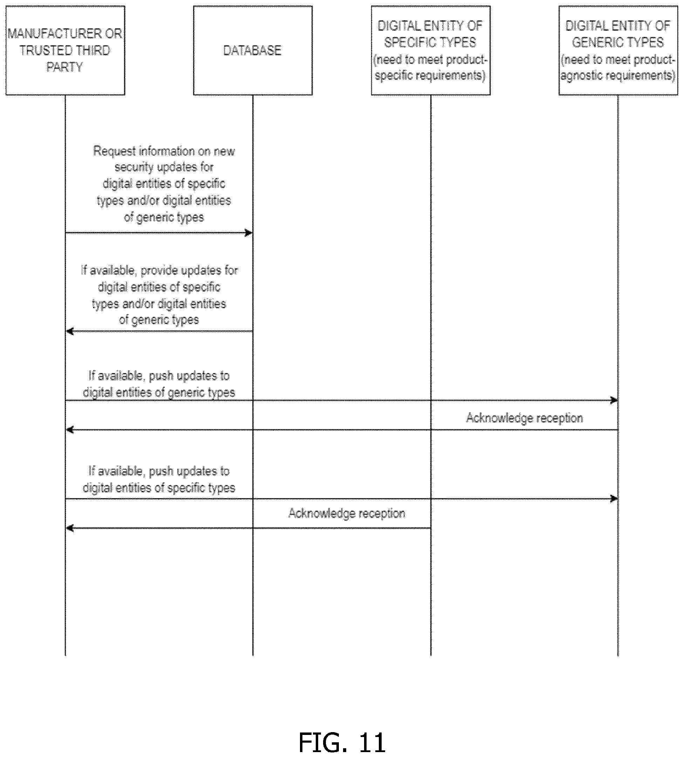

Figure 11 depicts a flow diagram in which trusted third parties or manufacturers of a corresponding digital entity 120 may request an update from a database for the digital entity 120 to comply with the cybersecurity requirements. The database may be run by an authority, in some cases the database may be government-operated database to unify available updates for the digital entities. The updates may be critical updates which are mandatory for a corresponding digital entity 120 to comply with the cybersecurity requirements. The update content of the database may be restricted with critical updates only to keep the process in a feasible and implementable level, preventing low-priority updates to create an undue burden.

If an update available for a digital entity 120, the database may respond to request by providing the relevant updates to the corresponding manufacturer and/or the third party. The digital entity 120 may have a specific type such as the types given in Table 6. In some cases, the digital entity 120 of a specific type may only comply with the cybersecurity requirements by satisfying the second set of requirements of the cybersecurity requirements (i.e. product-specific requirements) in addition to the first set of requirements of the cybersecurity requirements. The digital entity 120 may have a generic type. In some examples, the digital entity of a generic type may comply with the cybersecurity requirements by satisfying the first set of cybersecurity requirements.

The corresponding digital entity 120 either of a specific or a generic type may receive the relevant update from the manufacturer and/or the trusted third party and may transmit a reception acknowledge to the source (e.g. the manufacturer). It is to be noted that, since an update may relate to either all the digital entities of a specific or a generic type, the available update may concern all the relevant digital entities. Illustratively, a general update may be available to a digital entity of a generic type. Since the update relates to the first set of requirements of the cybersecurity requirements, all the digital entities regardless of their type may be subject to the update.

In another example, a general update may concern the digital entities of a specific type only. In that case, all the digital entities of specific types (such as given in Table 6) may subject to the available update as the update relates to the second set of requirements of the cybersecurity requirements. Therefore, the updates for the digital entities of specific types may not be mandatory for the digital entities having generic types.

The vulnerability handling process shown in figure 11 may be performed dynamically to ensure that each digital entity is up to date. In some cases, the process may be initiated within predefined time intervals. In that way, the security of the digital entities may not be jeopardized and it may be ensured that all the digital entities operate in a compliant and secure manner.

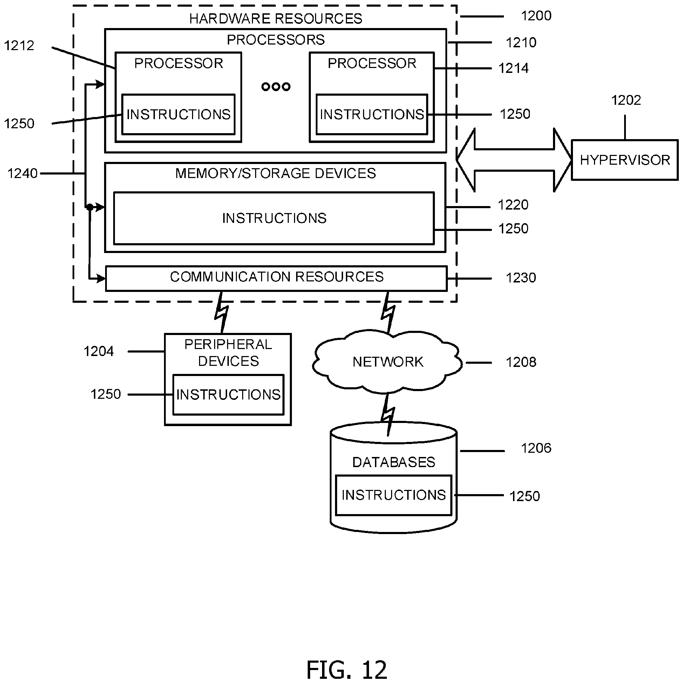

Figure 12 is a block diagram illustrating components, according to some example embodiments, able to read instructions from a machine-readable or computer-readable medium (e.g., a non-transitory machine-readable storage medium) and perform any one or more of the methodologies discussed herein. Specifically, Figure 12 shows a diagrammatic representation of hardware resources 1200 including one or more processors (or processor cores) 1210, one or more memory/storage devices 1220, and one or more communication resources 1230, each of which may be communicatively coupled via a bus 1240 or other interface circuitry. For embodiments where node virtualization (e.g., NFV) is utilized, a hypervisor 1202 may be executed to provide an execution environment for one or more network slices/sub-slices to utilize the hardware resources 1200. Illustratively, aspects described herein (e.g. the apparatus 101) may be implemented, at least partially, by the hardware resources 1200 and the processors 1210 may include the processor 110.

The processors 1210 may include, for example, a processor 1212 and a processor 1214. The processors 1210 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 1220 may include main memory, disk storage, or any suitable combination thereof. The memory/storage devices 1220 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 1230 may include interconnection or network interface controllers, components, or other suitable devices to communicate with one or more peripheral devices 1204 or one or more databases 1206 or other network elements via a network 1208. For example, the communication resources 1230 may include wired communication components (e.g., for coupling via USB, Ethernet, etc.), cellular communication components, NFC components, Bluetooth^{®} (or Bluetooth^{®} Low Energy) components, Wi-Fi^{®} components, cellular communication components, and other communication components.

In particular, communication resources 1230 and/or components may operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP Rel. 19 (3rd Generation Partnership Project Release 19) and subsequent Releases (such as Rel. 20, Rel. 21, etc.), 3GPP 5G, 5G, 3GPP 6G, 6G, 6th Generation Cellular Networks, 5GNew Radio (5GNR), 3GPP 5G New Radio, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth(r), Radio Local Area Networks (RLAN), Wi-Fi (based on IEEE802.11 and/or IEEE 802.11b (Wi-Fi 1) and/or IEEE 802.11a (Wi-Fi 2) and/or IEEE 802.11g (Wi-Fi 3) and/or 802.11n (Wi-Fi 4) and/or IEEE 802.11ac (Wi-Fi 5) and/or IEEE 802.11ax (Wi-Fi 6) and/or IEEE802.11be (Wi-Fi 7) and/or any follow-up WiFi related technology), Wireless Gigabit Alliance (WiGig) standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p or IEEE 802.11bd and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others (typically operating in 5850 MHz to 5925 MHz or above (typically up to 5935 MHz following change proposals in CEPT Report 71)), the European ITS-G5 system (i.e. the European flavor of IEEE 802.11p based DSRC, including ITS-G5A (i.e., Operation of ITS-G5 in European ITS frequency bands dedicated to ITS for safety related applications in the frequency range 5,875 GHz to 5,905 GHz), ITS-G5B (i.e., Operation in European ITS frequency bands dedicated to ITS non- safety applications in the frequency range 5,855 GHz to 5,875 GHz), ITS-G5C (i.e., Operation of ITS applications in the frequency range 5,470 GHz to 5,725 GHz)), DSRC in Japan in the 700MHz band (including 715 MHz to 725 MHz), IEEE 802.11bd based systems, etc.

Aspects described herein can be used in the context of any spectrum management scheme including dedicated licensed spectrum, unlicensed spectrum, license exempt spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System / CBRS = Citizen Broadband Radio System in 3.55-3.7 GHz and further frequencies). Applicable spectrum bands include IMT (International Mobile Telecommunications) spectrum as well as other types of spectrum/bands, such as bands with national allocation (including 450 - 470 MHz, 902-928 MHz (note: allocated for example in US (FCC Part 15)), 863-868.6 MHz (note: allocated for example in European Union (ETSI EN 300 220)), 915.9-929.7 MHz (note: allocated for example in Japan), 917-923.5 MHz (note: allocated for example in South Korea), 755-779 MHz and 779-787 MHz (note: allocated for example in China), 790 - 960 MHz, 1710 - 2025 MHz, 2110 - 2200 MHz, 2300 - 2400 MHz, 2.4-2.4835 GHz (note: it is an ISM band with global availability and it is used by Wi-Fi technology family (11b/g/n/ax) and also by Bluetooth), 2500 - 2690 MHz, 698-790 MHz, 610 - 790 MHz, 3400 - 3600 MHz, 3400 - 3800 MHz, 3800 - 4200 MHz, 3.55-3.7 GHz (note: allocated for example in the US for Citizen Broadband Radio Service), 5.15-5.25 GHz and 5.25-5.35 GHz and 5.47-5.725 GHz and 5.725-5.85 GHz bands (note: allocated for example in the US (FCC part 15), consists four U-NIIbands in total 500 MHz spectrum), 5.725-5.875 GHz (note: allocated for example in EU (ETSIEN 301 893)), 5.47-5.65 GHz (note: allocated for example in South Korea, 5925-7125 MHz and 5925-6425MHz band (note: under consideration in US and EU, respectively. Next generation Wi-Fi system is expected to include the 6 GHz spectrum as operating band but it is noted that, as of December 2017, Wi-Fi system is not yet allowed in this band. Regulation is expected to be finished in 2019-2020 time frame), IMT-advanced spectrum, IMT-2020 spectrum (expected to include 3600-3800 MHz, 3800 - 4200 MHz, 3.5 GHz bands, 700 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 71 - 76 GHz, 81 - 86 GHz and 92 - 94 GHz, etc), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), 57-64/66 GHz (note: this band has near-global designation for Multi-Gigabit Wireless Systems (MGWS)/WiGig . In US (FCC part 15) allocates total 14 GHz spectrum, while EU (ETSI EN 302 567 and ETSI EN 301 217-2 for fixed P2P) allocates total 9 GHz spectrum), the 70.2 GHz - 71 GHz band, any band between 65.88 GHz and 71 GHz, bands currently allocated to automotive radar applications such as 76-81 GHz, and future bands including 94-300 GHz and above. Furthermore, the scheme can be used on a secondary basis on bands such as the TV White Space bands (typically below 790 MHz) where in particular the 400 MHz and 700 MHz bands are promising candidates. Besides cellular applications, specific applications for vertical markets may be addressed such as PMSE (Program Making and Special Events), medical, health, surgery, automotive, low-latency, drones, etc. applications.

Aspects described herein can also implement a hierarchical application of the scheme is possible, e.g. by introducing a hierarchical prioritization of usage for different types of users (e.g., low/medium/high priority, etc.), based on a prioritized access to the spectrum e.g. with highest priority to tier-1 users, followed by tier-2, then tier-3, etc. users, etc.

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.].

Some of the features in this document are defined for the network side, such as Access Points, eNodeBs, New Radio (NR) or next generation Node Bs (gNodeB or gNB - note that this term is typically used in the context of 3GPP fifth generation (5G) communication systems), etc. Still, a User Equipment (UE) may take this role as well and act as an Access Points, eNodeBs, gNodeBs, etc. I.e., some or all features defined for network equipment may be implemented by a UE.

Instructions 1250 may comprise software, a program, an application, an applet, an app, or other executable code for causing at least any of the processors 1210 to perform any one or more of the methodologies discussed herein. The instructions 1250 may reside, completely or partially, within at least one of the processors 1210 (e.g., within the processor's cache memory), the memory/storage devices 1220, or any suitable combination thereof. Furthermore, any portion of the instructions 1250 may be transferred to the hardware resources 1200 from any combination of the peripheral devices 1204 or the databases 1206. Accordingly, the memory of processors 1210, the memory/storage devices 1220, the peripheral devices 1204, and the databases 1206 are examples of computer-readable and machine-readable media.

Although various aspects have been described in a manner associated with devices, the skilled person would recognize that methods are also described through use of certain components associated with the devices.

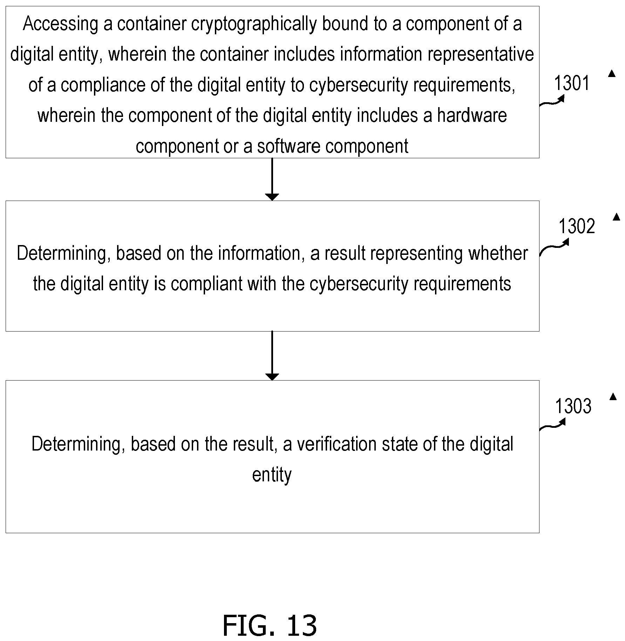

Figure 13 shows an example of a method. The method may include: accessing 1301 a container cryptographically bound to a component of a digital entity, wherein the container includes information representative of a compliance of the digital entity to cybersecurity requirements, wherein the component of the digital entity includes a hardware component or a software component; determining 1302, based on the information, a result representing whether the digital entity is compliant with the cybersecurity requirements; determining 1303, based on the result, a verification state of the digital entity.

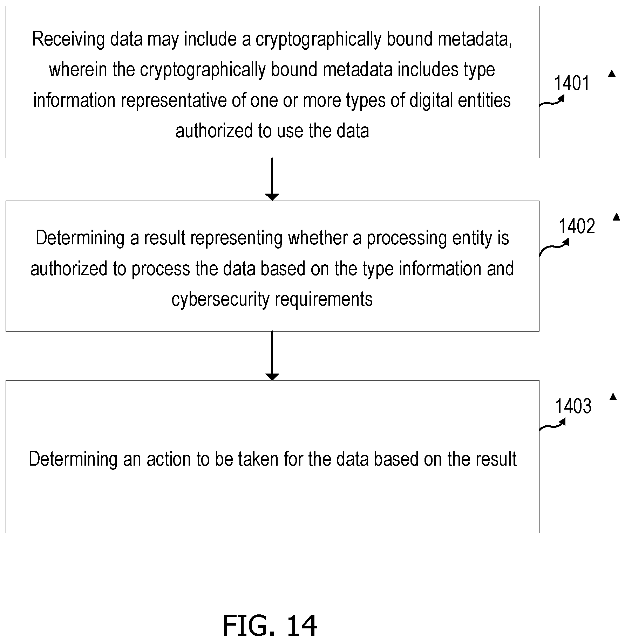

Figure 14 shows an example of a method. The method may include: receiving 1401 data may include a cryptographically bound metadata, wherein the cryptographically bound metadata includes type information representative of one or more types of digital entities authorized to use the data; determining 1402 a result representing whether a processing entity is authorized to process the data based on the type information and cybersecurity requirements; determining 1403 an action to be taken for the data based on the result.

Figure 15 shows an example of a method. The method may include: controlling 1501 an access to data associated with one or more digital entities couplable to the processor according to a set of requirements associated with cybersecurity requirements, wherein each digital entity of the one or more digital entities may include a hardware component or a software component; monitoring 1502 an activity of the one or more digital entities for the access to the data; encoding 1503 information representative of the monitored activity for a transmission to an external database.

Figure 16 shows an exemplary illustration of the association between the processor 110 and a cryptographically bound metadata as part of a data, such as the data 222 encapsulated in a corresponding container and provided to a corresponding processing entity 220. The metadata may be encrypted using a cryptographical technique, such as a digital signature to ensure that the metadata is not tempered. In that sense, the metadata may be encrypted with a secret key, such as a private key. The cryptographically bound metadata may include type information indicating one or more types and/or categories of digital entities that are authorized to use the data. Additionally, the metadata may further include a proof of compliance to relevant product-specific requirements presented by the cybersecurity requirements for the categories/types defined in Table 6. In some cases, the metadata may also include information representing one or more of the source of the data 222, and/or the date of creation of the data, and/or an expiration date of the data, a lifetime of the data, and/or usage conditions indicating the specific entities that may be authorized to use the data, etc. Although it is emphasized that the data 222 includes the metadata associated with cybersecurity requirements, in some aspects, the data 222 may also include, in addition to the metadata associated with cybersecurity requirements, a metadata associated with the AI requirements.

The processor 110 may, via a supplied key, decode the data 222 comprising cryptographically bound metadata to obtain the content of the metadata. The processor 110 may decode the data 222 to determine whether the data 222 is authorized to use for the processing entity 220 based on the content that the metadata may include. Further, the processor 110 may evaluate whether the processing entity 220 is authorized to use and/or process the data 222 by accessing a memory 610 that may store information about the processing entity 222. The memory 610 may be a non-volatile memory that is used to store information about the processing entity 220 in which the information may include an entity identifier, a type information, and the like. Additionally, or alternatively, the processor 110 may exchange information with the processing entity 220 to determine whether the processing entity 220 is authorized. In an example, the processor 110 may determine that the processing entity 220 is authorized by matching a relevant information in the decoded metadata with the information stored in the memory 610.

Further, the processor 110 may encode information regarding the processing of the data 222. In an example, the processor 110 may determine that the processing entity 220 is authorized and the result may be encoded and written into the memory 610, so that a current authorization state of the processing entity 220 is stored. In another example, the processor 110 may determine that the processing entity 220 is not authorized anymore (e.g. due to a change in the metadata). In that case, the processor 110 may update the authorization state of the processing entity 220 by overwriting the information regarding the previous state.

In some aspects, the processor 110 may generate additional information following a processing of the data 222 by the processing entity 220 determined to be authorized. The additional information may indicate the information relating to the processed data for further use. In some aspects, the processor 110 may generate another metadata based on the additional data in order to include information regarding the processed data, such as an authorization information of the processed data. The generated metadata may be cryptographically bound to the processed data (e.g. encapsulated in an existing container) by using a cryptographic key for protection against an unauthorized access as well as for ensuring the authenticity of the information regarding the processed data.

In some examples, the processor 110 may encode information relating to the use of the processing entity 220 for data processing. The information may include a time/date information, usage time, and the like. In some examples, the processor 110 may encode information regarding a user that interacts with the processing entity 220. In that case, the information may include authorization level of the user, user credentials information, etc. The information may be stored in the memory 610 for a later inspection regarding the use of the processing entity 220

The following examples pertain to further aspects of this disclosure.

In example 1, the subject matter includes an apparatus that may include a processor, the processor configured to: access a container cryptographically bound to a component of a digital entity, wherein the container includes information representative of a compliance of the digital entity to cybersecurity requirements, wherein the component of the digital entity includes a hardware component or a software component; determine, based on the information, a result representing whether the digital entity is compliant with the cybersecurity requirements; determine, based on the result, a verification state of the digital entity.

In example 2, the subject matter of example 1, wherein the container further includes a component identifier of the digital entity.

In example 3, the subject matter of any example 1 or 2, wherein the verification state of the digital entity is determined dynamically based on a predefined time interval.

In example 4, the subject matter of any one of examples 1 to 3, wherein the processor is further configured to perform at least one of determining the verification state of the digital entity or accessing the container in response to an interaction with the digital entity.

In example 5, the subject matter of any one of examples 1 to 4, wherein the interaction includes at least one of: an interoperation; an association to generate a product; and/or an exchange of signal or information.

In example 6, the subject matter of any one of examples 1 to 5, wherein the processor is further configured to use the component for an operation only when the component is determined to be compliant with the cybersecurity requirements.

In example 7, the subject matter of any one of examples 1 to 6, wherein the information is representative of a first set of requirements and a second set of requirements; wherein the processor is further configured to determine the result based on the first set of requirements; wherein the processor is further configured to determine whether to determine the result further based on the second set of requirements according to a product type of an interacting component that intends to interact with the digital entity.

In example 8, the subject matter of any one of examples 1 to 7, wherein the component is a first component and the digital entity is a first digital entity and wherein the processor is further configured to: access a second container cryptographically bound to a second component of a second digital entity, wherein the second container includes information representative of a compliance of the second digital entity to the cybersecurity requirements, wherein the second component includes a hardware component or a software component; determine, based on the information, a further result representing whether the second digital entity is compliant with the cybersecurity requirements; determine, based on the further result, a verification state of the second digital entity.

In example 9, the subject matter of example 8, wherein the verification state is a first verification state; wherein the processor is further configured to determine an interaction verification state for an interaction between the first digital entity and the second digital entity based on at least one of the information representative of the compliance of the first component and the information representative of the compliance of the second component.

In example 10, the subject matter of any one of examples 1 to 9, wherein the processor is further configured to perform at least one of determining the verification state of the digital entity or accessing the container in response to an update associated with the digital entity.

In example 11, the subject matter of any one of examples 1 to 10, wherein the processor is further configured to determine a further verification state involving the digital entity at each subset assembly of a digital product hierarchically.

In example 12, the subject matter of any one of examples 1 to 11, wherein the processor is configured to: decode information received from a database, wherein the decoded information is representative of one or more updates associated with the digital entity; prevent an interaction with the digital entity until the one or more updates applied to the digital entity.

In example 13, the subject matter of any one of examples 1 to 12, wherein the processor is further configured to control an access to data associated with the digital entity.

In example 14, the subject matter of any one of examples 1 to 13, wherein the processor is further configured to: monitor an activity of the one or more digital entities for the access of data; encode information representative of the monitored activity for a transmission.

In example 15, the subject matter of any one of examples 1 to 14, wherein the processor is configured to: decode information received from a database, wherein the decoded information is representative of one or more updates associated with the digital entity; prevent an interaction with the digital entity until the one or more updates applied to the digital entity.

In example 16, the subject matter of any one of examples 1 to 15, wherein the processor is configured to determine a first configuration based on a first set of requirements in accordance with the cybersecurity requirements in case the result is representative of the processing entity being authorized to process the data.

In example 17, the subject matter of any one of examples 1 to 16, wherein the processor is configured to determine a second configuration based on a second set of requirements in accordance with the cybersecurity requirements in case the result is representative of the processing entity not being authorized to process the data.

In example 18, the subject matter includes an apparatus that may include a processor configured to: receive data may include a cryptographically bound metadata, wherein the cryptographically bound metadata includes type information representative of one or more types of digital entities authorized to use the data; determine a result representing whether a processing entity is authorized to process the data based on the type information and cybersecurity requirements; determine an action to be taken for the data based on the result.

In example 19, the subject matter of example 18, wherein the cryptographically bound metadata further includes at least one of: a source of the data; a date of creation of the data; a lifetime or a validity expiration date of the data; a usage condition of the data; and/or a proof of compliance associated with the cybersecurity requirements.

In example 20, the subject matter of example 18 or 19, wherein the processor is further configured to determine a first configuration based on a first set of requirements in accordance with the cybersecurity requirements in case the result is representative of the processing entity being authorized to process the data.

In example 21, the subject matter of example 20, wherein the processor is further configured to determine a second configuration based on a second set of requirements in accordance with the cybersecurity requirements in case the result is representative of the processing entity not being authorized to process the data.

In example 22, the subject matter of any one of examples 18 to 21, wherein the processor is further configured to determine whether the processing entity is compliant to a set of requirements associated with the cybersecurity requirements.

In example 23, the subject matter of example 22, wherein the processor is configured to prevent a processing of the data by the processing entity if the result represents that the processing entity is not authorized to process the data.

In example 24, the subject matter of any one of examples 18 to 23, wherein the processor is configured to determine a further processing entity for a processing of the data based on the type information and information associated with the further processing entity; and wherein the processor is configured to instruct the further processing entity for the processing of the data.

In example 25, the subject matter of any one of examples 18 to 24, wherein the processor is configured to reject a processing request of the processing entity to process the data.

In example 26, the subject matter of any one of examples 18 to 25, wherein the processor is further configured to determine the result based on stored information representative of a type of the processing entity and/or a type of digital entities for which the processing entity is authorized to process.

In example 27, the subject matter of any one of examples 18 to 26, wherein the processor includes the processing entity, and the cryptographically bound metadata is a first cryptographically bound metadata, and wherein the processing entity is configured to perform a processing to provide output data may include a second cryptographically bound metadata.

In example 28, the subject matter of example 27, wherein the second cryptographically bound metadata includes a further one or more types of digital entities authorized to use the data generated by the processor.

In example 29, the subject matter of example 27 or example 28, wherein the output data further includes the first cryptographically bound metadata.

In example 30, the subject matter of any one of examples 18 to 29, wherein the data further includes a further cryptographically bound metadata may include a list of application types representative of one or more application types for which the data is authorized to be used.

In example 31, the subject matter of example 30, wherein the processor is configured to determine the result based on the further cryptographically bound metadata and an application type of the processing entity.

In example 32, the subject matter of example 30 or example 31, wherein the processor is further configured to determine a further configuration based on a further set of requirements in accordance with the cybersecurity requirements in case the result is representative of the processing entity not being authorized to process the data based on the further cryptographically bound metadata.

In example 33, the subject matter of any one of examples 30 to 32, wherein the processor is configured to prevent a processing of the data by the processing entity if the processing entity is configured to execute an application having an application type based on the list of application types.

In example 34, the subject matter of any one of examples 18 to 33, wherein the processor is configured to form an assembly between one or more digital entities and one or more processing entities by selecting the one or more processing entities from a plurality of processing entities; Wherein the one or more processing entities are selected based on the cybersecurity requirements associated with the one or more digital entities and authorization states of the one or more processing entities.

In example 35, the subject matter includes an apparatus may include a processor configured to: control an access to data associated with one or more digital entities couplable to the processor according to a set of requirements associated with cybersecurity requirements, wherein each digital entity of the one or more digital entities may include a hardware component or a software component; monitor an activity of the one or more digital entities for the access to the data; encode information representative of the monitored activity for a transmission to a database external to the apparatus.

In example 36, the subject matter of example 35, wherein the activity is monitored in accordance with a compliance to the cybersecurity requirements.

In example 37, the subject matter of example 35 or 36, wherein the processor is further configured to perform a restriction to the access to the data, wherein the restriction includes providing the access to only a set of data items of the data for a requesting entity of the one or more digital entities for a respective operation.

In example 38, the subject matter of any one of examples 35 to 37, wherein the processor is further configured to control the access to the data based on an authorization of a user interacting with the apparatus.

In example 39, the subject matter of example 38, wherein the processor is further configured to request an authorization from the user in case the access to the data requires a modification of a private data, wherein the private data includes personal data.

In example 40, the subject matter of example 39, wherein the processor is further configured to perform an interruption when the authorization request is rejected or ignored by the user.

In example 41, the subject matter of example 39 or 40, wherein the processor is further configured to control an access level of the user to use the one or more digital entities for the respective operation, wherein the access level is representative of authorization level associated with the user.

In example 42, the subject matter of example 41, wherein the processor is further configured to determine whether to authenticate the user to use the one or more digital entities for the respective operation, wherein the determination is based on the access level of the user.

In example 43, the subject matter of any one of examples 35 to 42, wherein the processor is further configured to determine a first access configuration based on a first set of requirements in accordance with the cybersecurity requirements to control the access to data and/or a second access configuration based on a second set of requirements in accordance with the cybersecurity requirements.

In example 44, the subject matter of example 43, wherein the processor is further configured select one of the first access configuration or the second access configuration based on a type of a requesting entity of the one or more digital entities that requests an access to the data.

In example 45, the subject matter of any one of examples 35 to 44, wherein the processor is further configured to decode information received from an external database, wherein the information is representative of a presence of an update for at least one of the apparatus or the one or more digital entities.

In example 46, the subject matter includes a system that may include: a first processing entity configured to process first data to obtain a second data; wherein the first data includes a first cryptographically bound metadata may include type information representative of first one or more types of entities authorized to use the first data; a second processing entity configured to process the second data to obtain a third data; wherein the second data includes a second cryptographically bound metadata may include type information representative of second one or more types of entities authorized to use the second data; a processor configured to determine whether the second processing entity is authorized to process the first data based on the type information of the second cryptographically bound metadata.

In example 47, the subject matter of example 46, wherein the second data further includes the first cryptographically bound metadata.

In example 48, the subject matter of example 46 or 47, wherein the second cryptographically bound metadata further includes the first one or more types of entities authorized to use the data.

In example 49, the subject matter of any one of examples 46 to 48, wherein the processor is configured to determine a first configuration based on a first set of requirements in accordance with the cybersecurity requirements in case the processor determines that the second processing entity is authorized.

In example 50, the subject matter of example 49, wherein the processor is configured to determine a second configuration based on a second set of requirements in accordance with the cybersecurity requirements in case the processor determines that the second processing entity is not authorized.

In example 51, the subject matter of any one of examples 46 to 50, wherein the processor is further configured to determine whether the first processing entity and/or the second processing entity is compliant to a set of requirements associated with the cybersecurity requirements.

In example 52, the subject matter includes a method that may include: requesting, from an external database, information representative of a presence of an update for a plurality of digital entities associated with cybersecurity requirements, wherein each digital entity of the plurality of digital entities includes a hardware component or a software component; receiving a response, from the external database, indicating the presence of the update for the digital entity; updating each digital entity of the plurality of digital entities in case the response is indicative of an update applicable to all of the plurality of digital entities; updating selected digital entities of the plurality of digital entities in case the response is indicative of an update applicable to a subset of the plurality of digital entities.

In example 53, the subject matter includes a method that may include: accessing a container cryptographically bound to a component of a digital entity, wherein the container includes information representative of a compliance of the digital entity to cybersecurity requirements, wherein the component of the digital entity includes a hardware component or a software component; determining, based on the information, a result representing whether the digital entity is compliant with the cybersecurity requirements; determining, based on the result, a verification state of the digital entity.

In example 54, the subject matter of example 53, wherein the container further includes a component identifier of the digital entity.

In example 55, the subject matter of any one of examples 53 or 54, wherein the verification state of the digital entity is determined dynamically based on a predefined time interval.

In example 56, the subject matter of any one of examples 53 to 55, further may include performing at least one of determining the verification state of the digital entity or accessing the container in response to an interaction with the digital entity.

In example 57, the subject matter of any one of examples 53 to 56, wherein the interaction includes at least one of: an interoperation; an association to generate a product; and/or an exchange of signal or information.

In example 58, the subject matter of any one of examples 53 to 57, further may include using the component for an operation only when the component is determined to be compliant with the cybersecurity requirements.

In example 59, the subject matter of any one of examples 53 to 6, wherein the information is representative of a first set of requirements and a second set of requirements; wherein the method further includes determining the result based on the first set of requirements; and determining whether to determine the result further based on the second set of requirements according to a product type of an interacting component that intends to interact with the digital entity.

In example 60, the subject matter of any one of examples 53 to 7, wherein the component is a first component and the digital entity is a first digital entity and the method further includes: accessing a second container cryptographically bound to a second component of a second digital entity, wherein the second container includes information representative of a compliance of the second digital entity to the cybersecurity requirements, wherein the second component includes a hardware component or a software component; determining, based on the information, a further result representing whether the second digital entity is compliant with the cybersecurity requirements; determining, based on the further result, a verification state of the second digital entity.

In example 61, the subject matter of example 60, wherein the verification state is a first verification state; wherein the method further includes determining an interaction verification state for an interaction between the first digital entity and the second digital entity based on at least one of the information representative of the compliance of the first component and the information representative of the compliance of the second component.

In example 62, the subject matter of any one of examples 53 to 61, further may include performing at least one of determining the verification state of the digital entity or accessing the container in response to an update associated with the digital entity.

In example 63, the subject matter of any one of examples 53 to 62, further may include determining a further verification state involving the digital entity at each subset assembly of a digital product hierarchically.

In example 64, the subject matter of any one of examples 53 to 68, further may include: decoding information received from a database, wherein the decoded information is representative of one or more updates associated with the digital entity; preventing an interaction with the digital entity until the one or more updates applied to the digital entity.

In example 65, the subject matter of any one of examples 53 to 64, further may include controlling an access to data associated with the digital entity.

In example 66, the subject matter of any one of examples 53 to 65, further may include: monitoring an activity of the one or more digital entities for the access of data; encoding information representative of the monitored activity for a transmission.

In example 67, the subject matter of any one of examples 53 to 66, further may include: decoding information received from a database, wherein the decoded information is representative of one or more updates associated with the digital entity; preventing an interaction with the digital entity until the one or more updates applied to the digital entity.

In example 68, the subject matter of any one of examples 53 to 67, further may include determining a first configuration based on a first set of requirements in accordance with the cybersecurity requirements in case the result is representative of the processing entity being authorized to process the data.

In example 69, the subject matter of any one of examples 53 to 68, further may include determining a second configuration based on a second set of requirements in accordance with the cybersecurity requirements in case the result is representative of the processing entity not being authorized to process the data.

In example 70, the subject matter includes a method that may include: receiving data may include a cryptographically bound metadata, wherein the cryptographically bound metadata includes type information representative of one or more types of digital entities authorized to use the data; determining a result representing whether a processing entity is authorized to process the data based on the type information and cybersecurity requirements; determining an action to be taken for the data based on the result.

In example 71, the subject matter of example 70, wherein the cryptographically bound metadata further includes at least one of: a source of the data; a date of creation of the data; a lifetime or a validity expiration date of the data; a usage condition of the data; and/or a proof of compliance associated with the cybersecurity requirements.

In example 72, the subject matter of example 70 or 71, further may include determine a first configuration based on a first set of requirements in accordance with the cybersecurity requirements in case the result is representative of the processing entity being authorized to process the data.

In example 73, the subject matter of example 72, further may include determine a second configuration based on a second set of requirements in accordance with the cybersecurity requirements in case the result is representative of the processing entity not being authorized to process the data.

In example 74, the subject matter of any one of examples 70 to 73, further may include determining whether the processing entity is compliant to a set of requirements associated with the cybersecurity requirements.

In example 75, the subject matter of example 74, further may include preventing a processing of the data by the processing entity if the result represents that the processing entity is not authorized to process the data.

In example 76, the subject matter of any one of examples 70 to 75, further may include determining a further processing entity for a processing of the data based on the type information and information associated with the further processing entity; and instructing the further processing entity for the processing of the data.

In example 77, the subject matter of any one of examples 70 to 76, further may include rejecting a processing request of the processing entity to process the data.

In example 78, the subject matter of any one of examples 70 to 77, further may include determining the result based on stored information representative of a type of the processing entity and/or a type of digital entities for which the processing entity is authorized to process.

In example 79, the subject matter of any one of examples 70 to 78, wherein the processor includes the processing entity, and the cryptographically bound metadata is a first cryptographically bound metadata, and wherein the processing entity is configured to perform a processing to provide output data may include a second cryptographically bound metadata.

In example 80, the subject matter of example 79, wherein the second cryptographically bound metadata includes a further one or more types of digital entities authorized to use the data generated by the processor.

In example 81, the subject matter of example 79 or example 80, wherein the output data further includes the first cryptographically bound metadata.

In example 82, the subject matter of any one of examples 70 to 81, wherein the data further includes a further cryptographically bound metadata may include a list of application types representative of one or more application types for which the data is authorized to be used.

In example 83, the subject matter of example 82, further may include determining the result based on the further cryptographically bound metadata and an application type of the processing entity.

In example 84, the subject matter of example 82 or example 83, further may include determining a further configuration based on a further set of requirements in accordance with the cybersecurity requirements in case the result is representative of the processing entity not being authorized to process the data based on the further cryptographically bound metadata.

In example 85, the subject matter of any one of examples 82 to 84, further may include preventing a processing of the data by the processing entity if the processing entity is configured to execute an application having an application type based on the list of application types.

In example 86, the subject matter of any one of examples 70 to 85, further may include forming an assembly between one or more digital entities and one or more processing entities by selecting the one or more processing entities from a plurality of processing entities; wherein the one or more processing entities are selected based on the cybersecurity requirements associated with the one or more digital entities and authorization states of the one or more processing entities.

In example 87, the subject matter includes a method that may include: controlling an access to data associated with one or more digital entities couplable to the processor according to a set of requirements associated with cybersecurity requirements, wherein each digital entity of the one or more digital entities may include a hardware component or a software component; monitoring an activity of the one or more digital entities for the access to the data; encoding information representative of the monitored activity for a transmission to an external database.

In example 88, the subject matter of example 87, wherein the activity is monitored in accordance with a compliance to the cybersecurity requirements.

In example 89, the subject matter of example 87 or 88, further may include performing a restriction to the access to the data, wherein the restriction includes providing the access to only a set of data items of the data for a requesting entity of the one or more digital entities for a respective operation.

In example 90, the subject matter of any one of examples 87 to 89, further may include controlling the access to the data based on an authorization of an interacting user.

In example 91, the subject matter of example 90, further may include requesting an authorization from the user in case the access to the data requires a modification of a private data, wherein the private data includes personal data.

In example 92, the subject matter of example 91, further may include performing an interruption when the authorization request is rejected or ignored by the user.

In example 93, the subject matter of example 91 or 92, further may include controlling an access level of the user to use the one or more digital entities for the respective operation, wherein the access level is representative of authorization level associated with the user.

In example 94, the subject matter of example 93, further may include determining whether to authenticate the user to use the one or more digital entities for the respective operation, wherein the determination is based on the access level of the user.

In example 95, the subject matter of any one of examples 87 to 94, further may include determining a first access configuration based on a first set of requirements in accordance with the cybersecurity requirements to control the access to data and/or a second access configuration based on a second set of requirements in accordance with the cybersecurity requirements.

In example 96, the subject matter of example 95, further may include selecting one of the first access configuration or the second access configuration based on a type of a requesting entity of the one or more digital entities that requests an access to the data.

In example 97, the subject matter of any one of examples 87 to 96, further may include decoding information received from an external database, wherein the information is representative of a presence of an update for at least one of the apparatus or the one or more digital entities.

In example 98, a non-transitory computer-readable medium may include one or more instructions which, if executed by a processor, cause the processor to perform the methods of any one of examples 53 to 97.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

## Claims

1. An apparatus comprising a memory and a processor, the processor configured to:
access a container cryptographically bound to a component of a digital entity, wherein the container comprises information representative of a compliance of the digital entity to cybersecurity requirements, wherein the component of the digital entity comprises a hardware component or a software component;
determine, based on the information, a result representing whether the digital entity is compliant with the cybersecurity requirements; and
determine, based on the result, a verification state of the digital entity.

2. The apparatus of claim 1, wherein the container further comprises a component identifier of the digital entity.

3. The apparatus of any one of claims 1 or 2, wherein the verification state of the digital entity is determined dynamically based on a predefined time interval.

4. The apparatus of any one of claims 1 to 3, wherein the processor is further configured to perform at least one of determining the verification state of the digital entity or accessing the container in response to an interaction with the digital entity.

5. The apparatus of any one of claims 1 to 4, wherein the interaction comprises at least one of: an interoperation; an association to generate a product; and/or an exchange of signal or information.

6. The apparatus of any one of claims 1 to 5, wherein the processor is further configured to use the component for an operation only when the component is determined to be compliant with the cybersecurity requirements.

7. The apparatus of any one of claims 1 to 6, wherein the information is representative of a first set of requirements and a second set of requirements;
wherein the processor is further configured to determine the result based on the first set of requirements; and
wherein the processor is further configured to determine whether to determine the result further based on the second set of requirements according to a product type of an interacting component that intends to interact with the digital entity.

8. The apparatus of any one of claims 1 to 7, wherein the component is a first component and the digital entity is a first digital entity and wherein the processor is further configured to:
access a second container cryptographically bound to a second component of a second digital entity, wherein the second container comprises information representative of a compliance of the second digital entity to the cybersecurity requirements, wherein the second component comprises a hardware component or a software component;
determine, based on the information, a further result representing whether the second digital entity is compliant with the cybersecurity requirements; and
determine, based on the further result, a verification state of the second digital entity.

9. The apparatus of claim 8, wherein the verification state is a first verification state;
wherein the processor is further configured to determine an interaction verification state for an interaction between the first digital entity and the second digital entity based on at least one of the information representative of the compliance of the first component and the information representative of the compliance of the second component.

10. The apparatus of any one of claims 1 to 9, wherein the processor is further configured to perform at least one of determining the verification state of the digital entity or accessing the container in response to an update associated with the digital entity.

11. The apparatus of any one of claims 1 to 10, wherein the processor is further configured to determine a further verification state involving the digital entity at each subset assembly of a digital product hierarchically.

12. The apparatus of any one of claims 1 to 11, wherein the processor is configured to:
decode information received from a database, wherein the decoded information is representative of one or more updates associated with the digital entity; and
prevent an interaction with the digital entity until the one or more updates applied to the digital entity.

13. The apparatus of any one of claims 1 to 12, wherein the processor is further configured to control an access to data associated with the digital entity.
